(19) Europäisches Patentamt
European Patent Office
Office européen des brevets

(11) **EP 2 740 522 B1**

(12) **EUROPÄISCHE PATENTSCHRIFT**

(45) Veröffentlichungstag und Bekanntmachung des Hinweises auf die Patenterteilung:
**21.10.2015 Patentblatt 2015/43**

(51) Int Cl.:
**B01D 29/56** *(2006.01)* **B01D 29/66** *(2006.01)*
**B01D 29/96** *(2006.01)* **B29C 47/68** *(2006.01)*

(21) Anmeldenummer: **12195894.6**

(22) Anmeldetag: **06.12.2012**

(54) **VERFAHREN UND VORRICHTUNG ZUR REINIGUNG EINES FLUIDS**

METHOD AND DEVICE FOR CLEANING A FLUID

PROCÉDÉ ET DISPOSITIF DE NETTOYAGE D'UN FLUIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**11.06.2014 Patentblatt 2014/24**

(73) Patentinhaber: **Aurotec GmbH**
**4840 Vöcklabruck (AT)**

(72) Erfinder:
• **Zikeli, Stefan**
**4844 Regau (AT)**
• **Longin, Michael**
**4863 Seewalchen am Attersee (AT)**
• **Ecker, Friedrich**
**4850 Timelkam (AT)**
• **Weidinger, Klaus**
**4860 Lenzing (AT)**

(74) Vertreter: **Sonn & Partner Patentanwälte**
**Riemergasse 14**
**1010 Wien (AT)**

(56) Entgegenhaltungen:
EP-A1- 0 922 558    WO-A1-98/22198
WO-A2-02/16113    WO-A2-98/41305

**Beschreibung**

Die vorliegende Erfindung betrifft ein Verfahren zur Reinigung eines Fluids und eine Filtervorrichtung mit Mechanismen zur einfachen Wartung und zum Filteraustausch.

Herkömmliche Filtervorrichtungen besitzen im Wesentlichen ein Gehäuse mit einem Einlass und einem Auslass für das verunreinigte bzw. das filtrierte Fluid, einen Filterträgerkörper, welcher im Gehäuse verschiebbar gelagert ist, und einen Filter, welcher sich im Filterträgerkörper befindet. Ist der Filter verstopft, so muss er gewechselt bzw. gereinigt werden. Dazu wird der Filterträgerkörper im Gehäuse so verschoben, dass beispielsweise der Einlass des Filterträgerkörpers verschlossen wird und jene Stelle des Filterträgerkörpers, welche den Filter aufweist, an eine der Reinigung zugängliche Stelle gelangt. Anschließend wird der Filterträgerkörper wieder in seine Ausgangsstellung zurück verschoben.

In der Patentveröffentlichung EP 0 314 024 A2 und in der DE 195 00 060 C werden Filterwechselanlagen für Kunststoffschmelzen beschrieben, worin auf einem Schieber befindliche Kammern mit je zwei montierten Filtern zwischen Positionen für eine Filtrierung und eine Rückspülung eines Filters über Rückstromkanäle wechseln. Spezielle Durchlässe und ein langer Kanal sind im Schieber notwendig, um jede Position des Schiebers ansprechen zu können. Dies kann zur Bildung von Toträumen und erschwerter Führung des Schiebers führen. Bei der Filtrierung von thermisch instabilen Fluiden kann es hier zur Zersetzung unter Bildung von unerwünschten oder gefährlichen Abbauprodukten kommen.

Die WO 92/16351 beschreibt ein einfaches System zur wahlweisen Rückspülung eines Filters durch Verschieben eines Filterblocks zwischen einer Auslassposition und einer Einlassposition. Diesem System fehlt eine Filteraustauschposition, die eine parallele weitere Filtrierung ermöglicht wie bereits in der EP 0 314 024 A2 beschrieben wurde.

Die DE 94 18 880 U1 betrifft eine Filteranlage mit einer Rückspülung, wobei zur Rückspülung der Filter auf einem Stützsieb auf der entsprechenden Seite des Filters angelagert ist.

Die DE 195 19 907 A1 beschreibt eine Siebwechselanlage, wobei zwei Einlasskanäle mit jeweils einem Sieb zusammenlaufen und entweder gemeinsam in einer Flussrichtung betrieben werden oder wobei ein Einlass als Auslass zur Rückspülung dienen kann.

In der EP 0 922 558 A1 wird eine Vorrichtung zum Filtrieren viskoser Spinnmassen, wie z.B. NMMO-Zellulose-Lösungen, beschrieben, in der ein Siebträgerkörper in einem Gehäuse verschiebbar gelagert ist, wobei ein Spalt zwischen dem Siebträgerkörper und dessen Führung vorgesehen ist, der unter Verzicht von Abstandhaltern durch den Druck der filtrierten Spinnmasse in einer schwebenden Position gehalten wird.

In der EP 0 781 356 B1 ist ein Verfahren zum Transportieren einer Cellulose-Lösung in einem wässrigen tertiären Aminoxid gezeigt, wobei ein sicherer Transport der Lösung dadurch erzielt wird, dass an Stellen mit geringer Strömungsgeschwindigkeiten eine Öffnung vorgesehen ist, aus der ein Teil der Lösung austritt ohne wieder mit dem Hauptstrom vereinigt zu werden. Zur Verbesserung der Strömung wird eine Leckage bewusst in Kauf genommen.

Die EP 0 915 729 B1 betrifft eine Filtriervorrichtung mit Abstandhaltern, die in der vorgenannten EP 0 922 558 A1 vermieden werden. Diesen beiden Patentschriften ist die Erkenntnis gemein, dass manche Spinnlösungen, wie NMMO-Zellulose-Lösungen, in den Führungen von Schiebe- oder Drehelementen zu Ablagerungen führen, welche korrosive oder andere der Produktqualität abträgliche Nebenprodukte bilden. Anstelle der Vermeidung von Toträumen werden bewusst Spalträume gebildet, welche regelmäßig gespült werden sollen. Ein Nachteil dieser Vorrichtung ist das Auftreten von Leckagen, d.h. der Verlust von Spinnlösung: der Fluidstrom, der in den Spalt gelangt, wird dabei nach außen abgeführt.

Ein Ziel der vorliegenden Erfindung ist ein Filtersystem zur Verfügung zu stellen, welches für instabile Fluide geeignet ist und unter Verhinderung von Totraumablagerungen, sodass keine korrosiven Abbauprodukte entstehen und zudem bewusst angebrachte Leckagen vermieden werden.

Erfindungsgemäß hat sich gezeigt, dass es zur Vermeidung der Bildung von korrosiven Belägen in einem Spalt wünschenswert ist, eine möglichst konstante Spaltbreite und somit einen im Wesentlichen gleichmäßigen Fließwiderstand und eine gleichmäßig verteilte Strömungsgeschwindigkeit im gesamten Spaltbereich zu erzielen. Erfindungsgemäß wird dieses Problem durch die Gegenstände der Ansprüche gelöst.

Im Speziellen betrifft die Erfindung ein Verfahren und eine Vorrichtung zur Reinigung eines Fluids mit einer Filtervorrichtung, welche Filtervorrichtung ein Gehäuse mit mindestens einem Einlass und mindestens einem Auslass aufweist und ein im Gehäuse verschiebbar aufgenommenes Schiebemittel bzw. einen Schieber mit mindestens einem Durchlasskanal mit mindestens zwei im Wesentlichen symmetrisch gegenüberliegenden Filtern, wobei das Fluid ausgehend vom Einlass des Gehäuses die Filter im Durchlasskanal symmetrisch anströmt und hinter den Filtern im Durchlasskanal zum Auslass des Gehäuses geleitet wird, wobei ein Teil des Fluids, welcher nicht durch den Durchlasskanal strömt, in einen Spalt zwischen Schiebemittel und Gehäuse eindringt bzw. den Spalt durchströmt und dabei einen hydrodynamischen Puffer bildet. Ebenso betrifft die Erfindung eine Filtervorrichtung, insbesondere zur Durchführung des erfindungsgemäßen Verfahrens, mit einem Gehäuse, das mindestens einen Einlass und mindestens einen Auslass aufweist, und mit einem im Gehäuse verschiebbar aufgenommenen Schieber, welcher mindestens einen Durchlasskanal mit zumindest zwei symmetrisch gegenüberliegenden Filtern aufweist, wobei zwischen dem Gehäuse und dem Schieber ein Spalt zum Durchtritt eines Teils des Fluids vorgesehen ist. Erfindungsgemäße nähere Beschreibungen der speziellen und vorzugsweisen Aspekte betreffen das Verfahren (in dem die Vorrichtung zum Einsatz kommt) und die Vorrichtung (die für das erfindungsgemäße Verfahren eingesetzt werden kann) gleichermaßen.

Im Rahmen der vorliegenden Erfindung hat sich gezeigt, dass bisherige Filteranordnungen zu Anlagerungen am Schieber neigen. Bekannt ist auch, dass für dieses Problem an sich Spalte zwischen den beweglichen Teilen möglich sind, wie z.B. in der EP 0 922 558 A1 beschrieben. Durch den asymmetrischen Kraftangriff auf den Siebträgerkörper, verursacht durch die einseitige Ausbildung des Abströmkanals, wird der Schieber auf die der Abströmseite gegenüberliegende Gehäuseführungsfläche gepresst. Somit kann sich kein Ringspalt mit annähernd konstanter Breite über den gesamten Schieberumfang ausbilden. Im der Abströmseite gegenüberliegenden Bereich der Schieberoberfläche besteht aufgrund der nicht oder kaum vorhandenen Strömung weiterhin die Gefahr von Verkrustungen und Ablagerungen.

Erfindungsgemäß wurde dieses Problem gelöst, indem der Durchlasskanal im Schieber in zumindest zwei symmetrisch gegenüberliegende Teilkanäle des Auslasses im Gehäuse mündet, wobei bei dem erfindungsgemäßen Verfahren im Spalt zwischen mindestens zwei Einlassmündungen und mindestens zwei Auslassmündungen des Durchlasskanals mindestens vier Spülströme erzeugt werden. Da im Gehäuse zwei oder mehr, bevorzugt gleichmäßig über den Umfang verteilte Einlass-Teilkanäle und zusätzlich zwei oder mehr, bevorzugt gleichmäßig über den Umfang verteilte Auslass-Teilkanäle angeordnet sind, welche in einer Durchlassposition des Schiebers jeweils gegenüber den entsprechenden Einlass- bzw. Auslassmündungen des Schiebers angeordnet sind, wird ein symmetrischer Kraftangriff auf den Schieber und somit eine hydrodynamische Zentrierung des Schiebers erreicht. Der von den Einlass-Teilkanälen ausgehende Strömungsdruck wirkt im günstigsten Fall gleichermaßen von beiden Seiten, so dass sich ein Kräftegleichgewicht einstellt, welches eine Reibung des Schiebers an einer Innenwand des Gehäuses minimiert und eine vollständig schwebende Lagerung begünstigt. Durch diese Maßnahme wird in jedem Betriebszustand des Filters eine gleichmäßige Spaltausbildung über den Umfang des Schiebers bewirkt und es werden Totzonen mit sehr niedriger bzw. verschwindender Strömungsgeschwindigkeit vermieden, sodass Ablagerungen und Verkrustungen an der gesamten Oberfläche effektiv vermieden werden können.

Die hier gemeinte Symmetrie bzw. die Charakerisierung von Elementen oder Teilen als "symmetrisch gegenüberliegend" bedeutet in diesem Zusammenhang, dass die Anordnung der Elemente bezüglich zumindest einer Symmetrieachse spiegelsymmetrisch oder drehsymmetrisch ist; im Allgemeinen sind damit auch mehrfache Symmetrien bzw. Anordnungen mit einer oder mehreren Symmetrieachsen gemeint. Insbesondere bezieht sich die Symmetrie auf eine Symmetrieachse entlang der Länge des Schiebemittels. Letztlich ausschlaggebend ist das durch die Anordnung Filter und Teilkanäle erzielte Kräftegleichgewicht. Dieses kann erfindungsgemäß mit zwei, drei, vier oder mehr Filtern bzw. Teilkanälen erzielt werden, wobei die Anzahl der Einlass-Teilkanäle, der Auslass-Teilkanäle und der Filter üblicherweise gleich ist. Es ist dem Fachmann aus dem oben Gesagten ebenso unmittelbar ersichtlich, dass ein Kräftegleichgewicht bei scheinbar asymmetrischen Anordnungen auch über eine geeignete Wahl der Filter- bzw. Teilkanalquerschnitte hergestellt werden kann. Sämtliche derartige Anordnungen erzielen die gleiche Wirkung wie die hier ausdrücklich beschriebene bevorzugte Ausführungsform der erfindungsgemäßen Vorrichtung mit gleichwertigen Mitteln.

Ein Merkmal der vorbekannten Ausführungen ist die Abführung des Leckagestromes aus dem Spalt zwischen Gehäuse und Schieber nach außen, d.h. über ein äußeres Ende des Spalts, welches durch das Ende des Schiebers oder das Ende des Gehäuses definiert ist, und nicht über einen Auslass. Der Leckagestrom wird dabei nicht wieder mit einem Hauptstrom des Fluids vereinigt, sondern geht für die weiteren Produktionsschritte (jedenfalls vorläufig) verloren. Dies erfolgt zwangsweise in Längs- bzw. Verschieberichtung des Schiebers, wobei sich zwangsweise ungleichmäßige Strömungsgeschwindigkeiten über den Umfang des Schiebers ergeben, da der Leckagestrom vorzugsweise ausgehend von Einlass- bzw. Auslasskanälen direkt in Längsrichtung des Schiebers fließt. In den Bereichen zwischen den Kanälen (in Umfangrichtung betrachtet) bilden sich Zonen, die entweder nicht oder nur unzureichend gespült werden und an denen somit Ablagerungen und Verkrustungen entstehen.

Zur Beseitigung dieses Nachteils kann erfindungsgemäß zusätzlich zum symmetrischen Kraftangriff auf den Schieber und der somit vorteilhaft über den gesamten Umfang des Schiebers im Wesentlichen gleichbleibenden Spaltbreite ein Leckagestrom nach außen verhindert werden, indem der Spalt zwischen Gehäuse und Schieber sich nicht über die gesamte Länge des Schiebers bzw. des Gehäuses erstreckt. Stattdessen kann das Verfahren dahingehend verbessert werden, dass sämtliche Spülströme zu einem Auslass des Gehäuses geleitet werden, beispielsweise indem der Spalt in Verschiebungsrichtung des Schiebers nach außen durch Dichtungselemente begrenzt ist. Bevorzugt können die Gehäuseenden, an denen der Schieber aus dem Gehäuse herausragt, möglichst fluiddicht ausgeführt werden. Dabei kann eine rein mechanisch erwirkte Abdichtung an den Gehäuseenden mit einer metallischen Abdichtung, einer Weichstoffdichtung, einer Stopfbuchsendichtung erzielt werden oder es können andere - an sich bekannte - Vorkehrungen zur Verhinderung von Leckage getroffen werden. Dementsprechend können bei der erfindungsgemäßen Filtervorrichtung zwischen Schieber und Gehäuse, bevorzugt metallische, Dichtungselemente vorgesehen sein, welche den ansonsten durchgängigen Spalt in Schieberichtung nach außen begrenzen. Beispielsweise können die Dichtungselemente in zwei oder mehr Ebenen parallel zur Mittelebene des Durchlasskanals, d.h. zu jener Ebene, für die die Summe der Abstände sämtlicher Mündungen des Durchlasskanals minimal ist bzw. - falls die Mittelpunkte der Mündungen in einer Ebene liegen - die durch die Mündungsmittelpunkte verlaufende Ebene, auf beiden Seiten des Durchlasskanals vorgesehen sein. Falls der Schieber mehrere Durchlasskanäle aufweist, kann auf Dichtungselemente zwischen den Durchlasskanälen unter Umständen verzichtet werden. Die zwei oder mehr Ebenen, in denen die Dichtungselemente angeordnet sind, sind vorzugsweise in Schieberichtung zueinander versetzt.

In Bezug auf die Spülströme im Spalt außerhalb des Schiebers hat es sich als besonders günstig herausgestellt, wenn deren Strömungsgeschwindigkeit im Wesentlichen gleich der Anströmgeschindigkeit der Filter im Durchlasskanal ist und/oder im Bereich von 0,02 bis 0,60 cm/s, vorzugsweise zwischen 0,10 und 0,40 cm/s ist. Auf Basis der Auslegung des Spalts ergibt sich, dass, da bei hohen Durchsätzen der Druck durch den höheren Druckverlust über den Filter vor dem Filter ansteigt, auch der Druckabfall im hydraulischen Puffer höher ist und eine größere Menge durchströmt.

Dabei hat sich als besonders vorteilhaft herausgestellt, wenn die Spaltbreite so gewählt ist, dass der Quotient des Volumens (in mm$^3$) des Spalts und der Summe der Filterflächen (in mm$^2$) des Schiebemittels einen Wert zwischen 0,5 mm und 3 mm aufweist. Dieser - auch als "Polymerpufferfaktor" bezeichnete - Wert definiert bei vorgegebenen Filter- und Schieberabmessungen jenen Bereich von Spaltbreiten, die einen besonders günstigen Kompromiss zwischen ausreichender Strömungsgeschwindigkeit (zur Vermeidung von Ablagerungen) und dennoch ausreichender Reinigung des Fluids (d.h. eine geringe Menge an ungefiltert durch den Spalt tretendem Fluid).

Außerdem ist es erfindungsgemäß günstig, die Spaltbreite so zu wählen, dass der spezifische Spülquerschnitt einen Wert zwischen 0,2% und 1,5% aufweist, wobei der spezifische Spülquerschnitt definiert ist als das Produkt der Anzahl der (unabhängigen) Spülströme mit dem Quotient des Spaltquerschnitts (in mm$^2$), d.h. der Spaltbreite multipliziert mit Länge des Spalts quer zur Strömungsrichtung der Spülströme bzw. in Verschieberichtung, durch die Summe der Filterflächen des Schiebemittels (in mm$^2$).

Um eine hydrodynamische Lagerung mit vorteilhafter Stabilität und zugleich ausreichender Strömungsgeschwindigkeit zu erzielen, kann das Verhältnis von Länge zur Höhe des Fluidfilms im Spalt vorzugsweise so gewählt werden, dass der Quotient der Länge des Spalts quer zur Strömungsrichtung der Spülströme bzw. in Verschieberichtung addiert mit der zweifachen Länge des Oszillationsbereichs durch den Durchmesser des Schiebemittels im Bereich zwischen 0,6 und 3 liegt.

Um möglichst gleichmäßige Spülströme zu erzielen, kann das Schiebemittel zur Variation der Spülstromverteilung im Wesentlichen senkrecht zur Flussrichtung der Spülströme bzw. in Schieberichtung verschoben werden. Wie bereits zuvor diskutiert, kommt es bei Vorrichtungen der eingangs angeführten Art vordergründig an den Flächen des Gehäuses oder des Schiebemittels, welche in direkten Kontakt mit dem Fluid gelangen, zu Fluidbelägen und es entstehen sich verfestigende Abbauprodukte. Dieses Problem wird erfindungsgemäß durch ein Verfahren zur Reinigung einer Vorrichtung der vorstehend besprochenen Art gelöst, wobei das Schrebemittel bzw. der Schieber zur Reinigung im Wesentlichen senkrecht zu dem Durchlasskanal verschoben wird. Eine Verschiebung hat den Vorteil, dass das im Spalt zwischen Schieber und Gehäuse befindliche Fluid durch die Relativbewegung der Spaltwände in Bewegung versetzt wird, so dass ein spülender Fluidstrom im Spalt unter Einwirkung des Strömungsdrucks angeregt wird.

Es hat sich generell als vorteilhaft herausgestellt, wenn der Schieber zylinderförmig ist. Der zwischen Gehäuse und Schieber vorgesehene Spalt weist in diesem Fall keine Ecken oder Kanten auf, welche die Fluidströmung behindern und die Ablagerung von Fluidbelägen begünstigen würden. Außerdem eignet sich die zylindrische Form besonders für eine gleichmäßig unter Druck auf dem Fluid schwebende Lagerung (Hydrodynamische Lagerung) des Schiebers, da der Fluidstrom im Spalt somit immer tangential zur Oberfläche des Schiebers verläuft und es daher keine Angriffsflächen für transversal zur Verschiebungsachse des Schiebers wirkende Kräfte gibt. Davon abgesehen kann ein zylindrisches Schiebemittel zur Variation der Spülstromverteilung zusätzlich oder alternativ zu einer Verschiebung besonders einfach gegenüber dem Gehäuse verdreht werden. Ganz allgemein kann mit einer Verdrehung unabhängig von der Form des Schiebemittels eine Variation der Spülstromverteilung erzielt werden, wobei vorzugsweise Verdrehungen um 1°-30°, besonders bevorzugt um 5°-15°, vorgenommen werden können.

Zur Vermeidung von Toträumen ist es weiters günstig, wenn bei einem derartigen Verfahren die Verschiebung bzw. Verdrehung des Schiebemittels geringer ist als die Höhe bzw. Breite der Mündungen der Durchlass-, Einlass- und Auslasskanäle, so dass der Fluidstrom im Durchlasskanal durch die Verschiebung bzw. Verdrehung nicht unterbrochen wird. Trotz der relativ geringen Verschiebung und/oder Verdrehung kann die Reinigungswirkung verbessert werden, indem die Verschiebung bzw. Verdrehung periodisch in beide Richtungen ausgehend von einer Durchlassposition entlang der bzw. um die Verschiebungsachse durchgeführt wird, so dass das Schiebemittel im Gehäuse schwingt oder oszilliert. Durch eine oszillierende Bewegung des Schiebemittels können insbesondere durch die Fluidströme an den Kanten der Mündungen durch lokale Druckunterschiede sehr effizient die Fluidbeläge abgetragen und entfernt werden. Bei einem entsprechenden Reinigungsvorgang kann die beschriebene oszillierende Bewegung vorzugsweise mindestens zwei Mal, vier Mal, zehn Mal oder 20 Mal in beide Richtungen durchgeführt werden. Durch ständige oszillierende Hub- und/oder Rotationsbewegungen des Schiebers wird zudem eine Vergleichmäßigung des Spülstromes erwirkt.

Um ein Rückspülen der Filter im Wesentlichen ohne Unterbrechung des Fluidflusses zu ermöglichen, kann das Schiebemittel mindestens zwei, in Schieberichtung zueinander versetzte, im Wesentlichen senkrecht auf eine Verschiebungsachse des Schiebers angeordnete Durchlasskanäle aufweisen, wobei das Schiebemittel beim Rückspülen gerade so weit verschoben wird, dass einer der Durchlasskanäle gegenüber dem Einlass vollständig verschoben und somit verschlossen ist aber weiterhin mit dem Auslass kommuniziert. Ein "kommunizieren", wie hierin verwendet, erlaubt einen direkten Fluss des Fluids zwischen den betreffenden Öffnungen, z.B. der Einlass-, Durchlass- bzw. Auslasskanäle, ohne einen Fluidfluss über den Spalt zu berücksichtigen.

Damit eine Rückspülung eines im Schieber eingesetzten Filters ohne wesentliche Leckage durchführbar ist, kann im Gehäuse ein Rückspülkanal vorgesehen sein, welcher beim in eine Rückspülposition verschobenen Schieber mit einem der beiden Durchlasskanäle kommuniziert. Insbesondere kann vorzugsweise der gegenüber dem Einlass vollständig verschobene und somit verschlossene Durchlasskanal eingangsseitig mit einem Rückspülkanal im Gehäuse kommunizieren, wobei die in diesem Durchlasskanal angeordneten Filter durch einen umgekehrten, d.h. gegen die betriebsmäßige Richtung gerichteten, Fluss des Fluids vom Auslass zum Rückspülkanal rückgespült werden. Beim Rückspülen tritt demzufolge das Fluid gegen die betriebsmäßige Durchflussrichtung aus dem Durchlasskanal durch den Filter in den Rückspülkanal. Wenn in der Rückspülposition der mit dem Rückspülkanal kommunizierende Durchlasskanal am anderen Ende mit einem Auslass-Teilkanal kommuniziert, wobei vorzugsweise zusätzlich der Auslass-Teilkanal mit einem anderen Durchlasskanal kommuniziert, welcher wiederum mit dem Einlass kommuniziert, kann der Fluidstrom vorteilhaft durch den mit dem Einlass kommunizierenden Durchlasskanal erhalten bleiben. Da der Rückspülkanal mit einer auf Seiten des Einlasses angeordneten Mündung des Durchlasskanals kommuniziert, liegt der Rückspülkanal günstigenfalls im Wesentlichen in einer Ebene mit den Einlass-Teilkanälen.

Falls beispielsweise keine befriedigende Reinigung eines Filters durch eine Rückspülung erzielbar ist, ist es vorteilhaft, wenn das Schiebemittel in eine Filterwechselstellung verschoben wird, wobei eine beispielsweise von einer Mündung eines Durchlasskanals zum Einlass hin gebildete Filteraufnahme eines Durchlasskanals vollständig außerhalb des Gehäuses angeordnet ist, so dass ein in der Filteraufnahme aufgenommener Filter entnommen bzw. ausgewechselt werden kann. In diesem Zusammenhang kann - bei geeigneter Konfiguration des Schiebemittels gemäß einer der vorstehend beschriebenen Möglichkeiten - der Fluidstrom durch den im Gehäuse verbleibenden Durchlasskanal und dessen Filter fortgesetzt werden. Auf diese Art und Weise ist auch der Schieber vollständig reinigbar, wobei bei einem Wechsel des einen (z.B. unteren) Filters die eine (untere) Hälfte und beim Wechsel des anderen (z.B. oberen) Filters die andere (obere) Hälfte des Schiebers gereinigt wird.

Die im Schieber bzw. Schiebemittel angeordneten Filter werden bevorzugt in eine Aufnahme eingesetzt. Wenn die Aufnahme auf der Seite des Einlasses so geformt ist, dass die Bewegung des Filters begrenzt ist, d.h. dass der Filter nur bis zu einer bestimmten Position eingeführt werden kann, beispielsweise weil sich die Aufnahme dahinter gegenüber den Filterabmessungen verjüngt, wird der Filter durch den Strömungsdruck in der Aufnahme gehalten. Bei dem Filter kann es sich um jede Trennvorrichtung handeln, die geeignet ist, teilchenförmige Verunreinigungen von dem Fluid abzutrennen, insbesondere um ein Sieb.

Erfindungsgemäß führt jeder Durchlasskanal des Schiebemittels in einen eigenen Teilkanal des Auslasses (und auch des Einlasses). Dennoch konnte eine Konfiguration gefunden werden, welche einen gewünschten Fluidfluss während des Betriebs, während einer Rückspülungsposition und während eines Sieb- oder Filterwechsels erlaubt.

Um den gewünschten Fluidfluss in einer Rückspülposition aufrecht zu erhalten, ist der Abstand zwischen den Mündungen der beiden Durchlasskanäle zum Auslass hin bevorzugt kleiner als die Höhe zumindest eines, vorzugsweise des ersten und des zweiten, Teilkanals des Auslasses. Durch den gegenüber der Höhe eines Teilkanals geringeren Abstand zwischen den Mündungen können die beiden Mündungen der Durchlasskanäle in der Rückspülposition kommunizieren, d.h. aus der im Wesentlichen zentriert zwischen den Teilkanälen angeordneten Mündung austretendes Fluid kann durch den der zweiten Mündung näheren Teilkanal in die nach außen verschobene zweite Mündung eintreten und somit eine Rückspülung des dort angeordneten Filters gegen die Durchlassrichtung durchführen. In diesem Zusammenhang ist es besonders vorteilhaft, wenn der Abstand zwischen den Mündungen der beiden Teilkanäle des Auslasses kleiner ist als die Höhe der Mündung zumindest eines Durchlasskanals, vorzugsweise zweier Durchlasskanäle, zum Auslass hin, da in diesem Fall das aus der zentriert angeordneten Mündung austretende Fluid gleichzeitig in den von der zweiten Mündung weiter entfernten Teilkanal des Auslasses austreten kann, so dass der Fluidfluss auch in diesem Teilkanal nicht zum Erliegen kommt.

Eine geeignete Anpassung der Mündungshöhe und der Mündungsabstände unter Beibehaltung eines ansonsten im Wesentlichen gleichen Leitungs- bzw. Kanaldurchmessers der Teil- und Durchlasskanäle kann auf einfache Weise dadurch erzielt werden, dass zumindest eine Mündung eines Teilkanals des Auslasses zum Schiebemittel entweder auf Gehäuse- oder auf Schiebemittelseite eine Verbreiterung aufweist.

Wenn der Abstand zwischen den Mündungen der beiden Teilkanäle des Einlasses kleiner ist als die Höhe der Mündung zumindest eines, vorzugsweise des ersten und des zweiten, Durchlasskanals zum Einlass hin, kann auch in einer verschobenen Rückspülposition, bei der die Mündung eines der Durchlasskanäle gegenüber den Teilkanälen des Einlasses vollständig verschoben ist, so dass kein Fluid in Durchlass- bzw. Filtrierrichtung in den betreffenden Durchlasskanal eintreten kann, ein Fluidfluss in beiden Teilkanälen des Einlasses bestehen bleiben. Das Fluid kann bei dieser Konfiguration aus beiden Teilkanälen des Einlasses durch den verbleibenden, in Filtrierrichtung offenen Durchlasskanal durchtreten. Der Verschluss des verschobenen Durchlasskanals bei erhaltenem Fluidfluss in beiden Teilkanälen des Einlasses kann insbesondere dann erzielt werden, wenn die Summe des Abstands zwischen den Mündungen der beiden Teilkanäle des Einlasses und der Höhe der Mündung des auf Seiten des verschobenen Durchlasskanals angeordneten Teilkanals kleiner ist als die Summe des Abstands zwischen den Mündungen der Durchlasskanäle zum Einlass hin und der Höhe der Mündung des offenen Durchlasskanals.

Vergleichbar der Anpassung auf Seiten des Auslasses ist es auch hier günstig für eine geeignete Konfiguration der Mündungshöhen und -abstände, unter Beibehaltung eines ansonsten im Wesentlichen gleichen Durchmessers der Teil- und Durchlasskanäle, wenn die Mündungen der Teilkanäle des Einlasses zum Schiebemittel entweder auf Gehäuse- oder auf Schiebemittelseite eine Verbreiterung aufweisen.

Unabhängig von der oben beschriebenen Aufgabe ist es Aufgabe der Erfindung, einen Fluidfluss während des Betriebs, während einer Rückspülungsposition und während eines Sieb- oder Filterwechsels zu erlauben und zugleich eine nicht akzeptable Fluidleckage bzw. einen nicht akzeptablen Fluidverlust zu vermeiden. Diese Aufgabe wird in Kombination mit den beschriebenen erfindungsgemäßen Verfahrensmerkmalen und/oder Vorrichtungen, aber auch unabhängig von diesen durch eine Filtervorrichtung für die Reinigung eines Fluids gelöst, mit einem Gehäuse, das mindestens einen Einlass und mindestens einen Auslass aufweist, und mit einem im Gehäuse verschiebbar aufgenommenen Schieber, welcher mindestens einen ersten und einen zweiten Durchlasskanal mit je einer Aufnahme für einen einsetzbaren Filter aufweist, wobei in einer Durchlassposition des Schiebers der Gehäuse-Einlass über mindestens einen ersten und einen zweiten Teilkanal in den ersten und bzw. zweiten Durchlasskanal des Schiebers mündet, wobei der erste und zweite Durchlasskanal in jeweils einen ersten und einen zweiten Teilkanal des Auslasses mündet, und wobei zwischen dem Gehäuse und dem Schieber ein Spalt im Bereich zwischen den Teilkanälen des Einlasses und des Auslasses vorgesehen ist.

In einer beliebigen Ausführungsform der Erfindung ist vorzugsweise das Gehäuse und/oder das Schiebemittel aus einem Metall oder einer Metalllegierung gebildet, welches vorzugsweise eisenhaltig ist. Metalllegierungen oder daraus gelöste Metallionen können als Katalysator für chemische Reaktionen dienen, inklusive für explosionsartige Reaktionen. Bei Verwendung von Metallen ist daher die erfindungsgemäße Vermeidung von Toträumen und Ablagerungen im Absperrorgan besonders vorteilhaft, um derartige Reaktionen zu vermeiden. Das Gehäuse und/oder das Schiebemittel können aus verschiedenen Materialien hergestellt sein, wie Stahl, Edelstahl, Keramik, Sintermetallen, Aluminium, Kunststoff, Buntmetallen oder Edelmetallen. Bevorzugte Werkstoffe sind alle Eisen, Eisenlegierungen, Chrom-Nickelstähle, Nickelstähle (z.B. Hastelloy-Materialien), Titan, Tantal, Siliziumcarbid, Glas, Keramik, Gold, Platin und auch Kunststoffe. Spezielle Materialien sind Legierungen mit hohem Molybdängehalt bzw. Nickel, Chrom und Molybdän-Legierungen zur Beständigkeit gegen Lochfraß und Spaltkorrosion oder Nickel-Kupfer-Legierungen mit hoher Zugfestigkeit. Materialbeispiele sind Hastelloy C (hohe Korrosionsfestigkeit), Hastelloy B (ausscheidungshärtende Hochtemperaturlegierung), Inconel (Beständigkeit gegen Spannungskorrosionsrisse in petrochemischen Anwendungen), Incoloy (hohe Festigkeit als auch Beständigkeit gegen hohe Temperaturen und gegenüber Oxidierung und Aufkohlung), Monel (hohe Zugfestigkeit, beständig gegenüber Korrosion). Das Gehäuse und/oder das Schiebemittel können aber auch aus beschichteten Materialien hergestellt sein.

Fluide, bei denen der Einsatz der erfindungsgemäßen Filtervorrichtung besonders zur Geltung kommt, sind chemisch instabile Fluide, die bei Ablagerung in der Filtervorrichtung korrosiv oder explosionsgefährdet sind.

In besonders bevorzugten Ausführungsformen ist das Fluid eine Formmasse, vorzugsweise eine Spinnmasse. Beispielsweise kann das Fluid eine Cellulose-Lösung, vorzugsweise eine Lösung von Cellulose mit einem Aminoxid, insbesondere bevorzugt mit NMMO (N-Methylmorpholin-N-oxid), sein.

Vorzugsweise ist das chemisch instabile Fluid thermisch instabil. Thermisch instabile Fluide sind beispielsweise Cellulose-Lösungen, wie Cellulose-Aminoxid-Lösungen, im Speziellen Lösungen von tertiärem Aminoxid und Wasser. Solche Lösungen können neben Stabilisatoren, wie z.B. Gallussäurepropylester, organische oder anorganische Basen, wie z.B. Natronlauge, enthalten. Weiters können solche Cellulose-/Aminoxid- und Wasser-Lösungen auch produktverändernde Additive, sogenannte Inkorporationsmedien, enthalten. Cellulose-Lösungen, im Aminoxidsystem hergestellt, zeichnen sich dadurch aus, dass sie beim Erkalten kristallisieren, aber bei einer Temperatur von ca. 72 - 75 °C geschmolzen werden können. Ein Beispiel ist eine Cellulose-NMMO-Lösung wie in der EP 789 822 beschrieben. Das Fluid kann eine wässrige Aminoxidlösung unterschiedlicher Konzentrationen sein. Thermisch instabile Fluide sind solche, bei denen die Gefahr einer Temperaturerhöhung während dem Transport durch das Verbindungsstück bzw. die Wärmetauscherleitung besteht. Temperaturerhöhungen können z.B. aufgrund von exothermen Reaktionen, insbesondere chemischen Reaktionen, oder aufgrund von Reibungswärme beim Transport hochviskoser Fluide auftreten. Weitere Fluide sind insbesondere erstarrbare Fluide, insbesondere "hot-melts", wie Polymere, Polycarbonate, Polyester, Polyamide, Polymilchsäure, Polypropylen, etc. Das Fluid kann ein thixotropes Fluid, insbesondere eine Spinnlösung, sein. Spezielle Fluide haben eine Schmelztemperatur von mindestens ca. 40°C, mindestens 50°C, mindestens 55°C, mindestens 60°C, mindestens 65°C, mindestens 70°C, mindestens 75°C. Das Fluid kann bei beispielhaften Temperaturen von mindestens ca. 40°C, mindestens 50°C, mindestens 55°C, mindestens 60°C, mindestens 65°C, mindestens 70°C, mindestens 75°C, mindestens ca. 80°C, mindestens 85°C, mindestens 90°C, mindestens 95°C, geführt werden. Das Verbindungsstück ist für den Transport dieser Fluide über den Schmelztemperaturen - z.B. gemäß gewählter Temperiermittel - ausgelegt. Vorzugsweise ist die Nullscherviskosität des Fluids im Bereich von 100 bis 20.000 Pas, insbesondere zwischen 500 bis 15.000 Pas.

Die vorliegende Erfindung wird weiters durch die folgenden Figuren und Beispiele erläutert, ohne auf diese Ausführungsformen der Erfindung limitiert zu sein.

Fig. 1 zeigt einen Schnitt durch eine im Stand der Technik bekannte Filtervorrichtung mit asymmetrischer Anspeisung.

Fig. 2a zeigt einen Schnitt durch das Gehäuse einer erfindungsgemäßen Filtervorrichtung mit innenliegendem Schieber, wobei ein Schnitt durch einen Durchlasskanal gezeigt ist.

Fig. 2b bzw. 2c zeigen einen Schnitt gemäß Fig. 2a bzw. entlang einer Verschiebungsachse des Schiebers, wobei keine Dichtungselemente zwischen Schieber und Gehäuse vorgesehen sind und die daher entstehenden Sektoren mit verschiedenen Spülstromgeschwindigkeiten eingezeichnet sind.

Fig. 3a und 3b sind mit Fig. 2b und 2c vergleichbare Darstellungen, mit dem Unterschied, dass hier Dichtungselemente zwischen Schieber und Gehäuse vorgesehen sind.

Fig. 4a und 4b zeigen Darstellungen mit Schnitt durch das Gehäuse und den darin positionierten Schieber entlang einer Verschiebungsachse des Schiebers, wobei der Schieber in Durchlassposition angeordnet ist.

Fig. 5a und 5b zeigen Darstellungen gemäß Fig. 4a und 4b in einer Zwischenposition beim Oszillieren des Schiebers und Fig. 5c zeigt ein Detail aus Fig. 5b.

Fig. 6a und 6b zeigen Darstellungen gemäß Fig. 4a und 4b in einer Rückspülposition und Fig. 6c zeigt ein Detail aus Fig. 6b.

Fig. 7a und 7b zeigen Darstellungen gemäß Fig. 4a und 4b in einer Siebwechselposition und Fig. 7c zeigt ein Detail aus Fig. 7b.

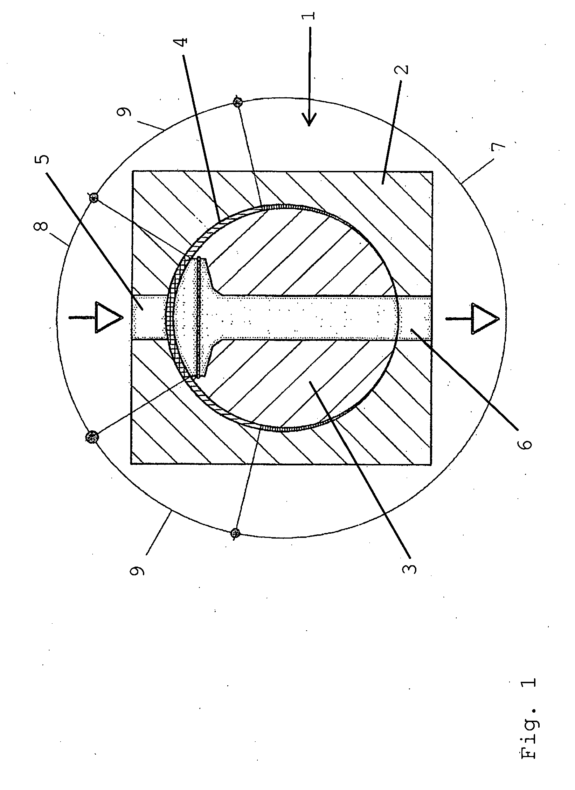

In Fig. 1 ist ein Querschnitt durch eine Filtervorrichtung 1 mit einem Gehäuse 2 und einem Schieber 3 gezeigt, wie sie im Stand der Technik bereits bekannt ist. Dabei ist zwischen Schieber 3 und Gehäuse 2 ein Spalt 4 vorgesehen, der sich im Wesentlichen parallel zu einer Längsachse des Schiebers 3, d.h. senkrecht auf die Darstellungsebene, bis zu einem oberen und unteren Rand des Gehäuses 2 erstreckt. In dem Spalt 4 entsteht aufgrund der Druckdifferenz zwischen einem Einlass 5 des Gehäuses 2 und der Umgebung eine Spülstrom. Allerdings nimmt aufgrund des einseitigen Drucks auf den Schieber 3 die Breite des Spalts 4 vom Einlass 5 zum gegenüberliegenden Auslass 6 ab. Dasselbe gilt aufgrund der Viskosität des Fluids für die Strömungsgeschwindigkeit, so dass auf der eher dem Auslass 6 zugewandten Seite des Schiebers 3 eine Zone 7 mit stagnierendem Spülstrom, eine so genannte "Totzone" entsteht, in der es leicht zu Ablagerungen des Fluids kommen kann. Die größte Strömungsgeschwindigkeit ist dagegen in der Zone 8 oberhalb und unterhalb (senkrecht bezüglich der Darstellungsebene) des Einlasses 5 zu beobachten. Zwischen dieser Zone 8 und der Totzone 7 liegt auf beiden Seiten des Einlasses 5 eine Zone 9 mit reduziertem Spülstrom.

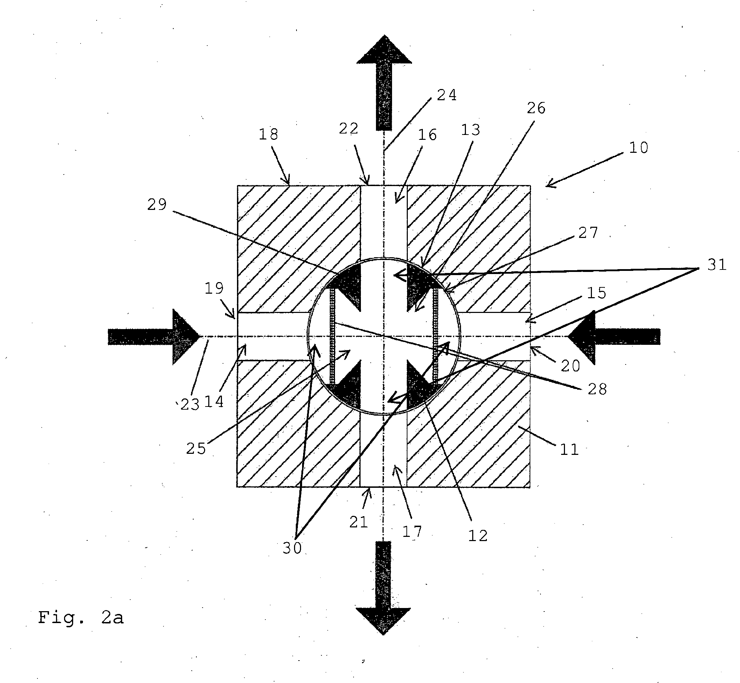

In Fig. 2a ist ein Schnitt durch eine erfindungsgemäße Filter- und Rückspülvorrichtung 10 für Fluide mit einem Gehäuse 11 und einem Schieber 12 gezeigt. Das Gehäuse 11 weist eine Ausnehmung 13 mit kreisförmigem Querschnitt zur Aufnahme des Schiebers 12 auf. Von der Ausnehmung 13 gehen vier Kanäle 14, 15, 16, 17 zur Außenseite 18 des Gehäuses 11, von denen zwei als Einlasskanäle 14, 15 und zwei als Auslasskanäle 16, 17 vorgesehen sind. Die Einlasskanäle 14, 15 verbinden zwei Einlässe 19, 20 des Gehäuses 11 mit der Schieberaufnahme 13 und die Auslasskanäle 16, 17 verbinden dementsprechend die Schieberaufnahme 13 mit zwei Auslässen 21, 22 des Gehäuses 11. Die beiden Einlass- und Auslasskanäle 14, 15, 16, 17 liegen einander jeweils auf einer Achse 23, 24 gegenüber, wobei die Achse 24 der Auslasskanäle 16, 17 im Wesentlichen senkrecht zur Achse 23 der Einlasskanäle 14, 15 angeordnet ist. Die Breite der vier Kanäle 14, 15, 16, 17 ist im Wesentlichen gleich und kleiner als der Radius der Ausnehmung 13. Der gezeigte Durchlasskanal 25 im Schieber 12 verbindet die vier Kanäle 14, 15, 16, 17 des Gehäuses 11 in der Art einer Kreuzung. Die Breite des Durchlasskanals 25 im Schieber 12 in Richtung der Auslasskanäle 16, 17 ist im Wesentlichen gleich der Breite der Auslasskanäle 16, 17. In Richtung der Einlasskanäle 14, 15 ist der Durchlasskanal 25 über einen Teil 26 der Strecke kegelstumpfförmig verbreitert, bevor er beidseitig in rohrförmige Filteraufnahmen 27 übergeht, die breiter sind bzw. einen größeren Durchmesser aufweisen als die ihnen gegenüberliegenden Einlasskanäle 14, 15 im Gehäuse 11. In den Filteraufnahmen 27 ist jeweils quer zur Strömungs- bzw. Kanalachse 23 ein Sieb 28 angeordnet, welches bis zur Wand der Filteraufnahme 27 reicht. Aufgrund der Verjüngung 26 des Durchlasskanals 25 von der Filteraufnahme 27 in Durchlassrichtung werden die Siebe 28 vom Strömungsdruck im Schieber 12 gehalten. Die Siebe 28 sind dabei nach der Durchlass- bzw. Strömungsrichtung ausgerichtet, d.h. entsprechend der vorgesehenen Siebkonfiguration (strömungszugewandte Seite, strömungsabgewandte Seite) in der Filteraufnahme 27 angeordnet. Der Schieber 12 ist im Wesentlichen zylinderförmig, wobei der Außenradius des Schiebers 12 kleiner ist als der Innenradius der Ausnehmung 13 im Gehäuse 11, so dass zwischen Gehäuse 11 und Schieber 12 ein Spalt 29 gebildet ist. Der Spalt 29 umgibt den Schieber 12 nach allen Seiten und verbindet somit auch die vier Kanäle 14, 15, 16, 17 des Gehäuses 11 untereinander. Der Spaltdurchmesser bzw. die Breite des Spalts 29 berechnet sich unter anderem aus der Gesamtfläche aller Siebe 28 des Schiebers 12, dem Durchmesser des Schiebers 12, dem Durchmesser eines Siebs 28 und - im Fall von mehreren Durchlasskanälen 25 - dem Abstand zwischen den Durchlasskanälen (siehe Tabelle am Ende der Beschreibung). Aufgrund der symmetrisch angeordneten Einlassmündungen 30 und Auslassmündungen 31 des Schiebers 12 erzeugt der Fluiddruck ein Kräftegleichgewicht, welches eine hydrodynamische Zentrierung des Schiebers 12 in der Ausnehmung 13 des Gehäuses bewirkt. Demzufolge ist der Durchmesser des Spalts 29 über den gesamten Umfang des Schiebers 12 im Wesentlichen gleich und es gibt - im Gegensatz zu der in Fig. 1 gezeigten Anordnung - keine Engstellen und Totzonen.

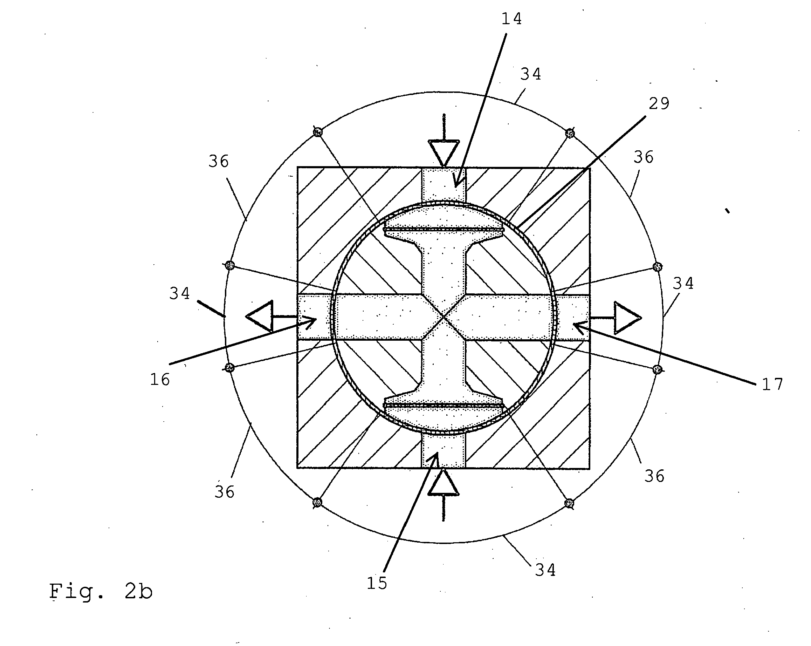

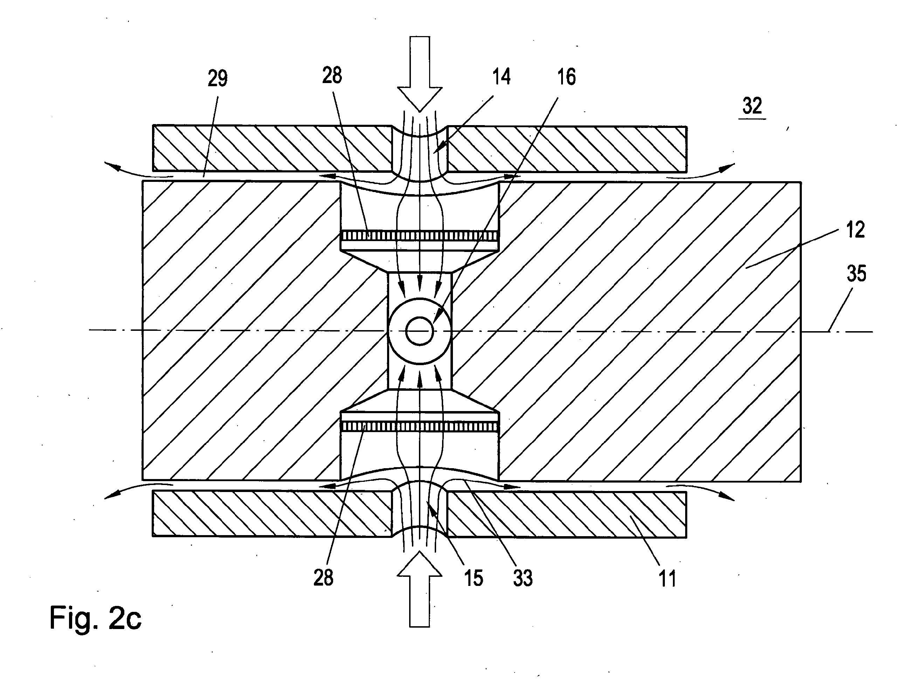

Trotzdem ist die Strömungsgeschwindigkeit des durch den Spalt 29 strömenden Fluids, welches einen Spülstrom bildet, nicht im gesamten Volumen des Spalts 29 konstant. Da der Druckunterschied zwischen den Einlasskanälen 14, 15 und der Umgebung (vgl. Fig. 2c) und zwischen den Auslasskanälen 16, 17 und der Umgebung 32 größer ist als zwischen den Einlasskanälen 14, 15 und den Auslasskanälen 16, 17, verläuft die Strömungsrichtung 33 in diesen Bereichen 34 (vgl. Fig. 2b) parallel zur Längsachse 35 des Schiebers 12, d.h. der Spülstrom verläuft sowohl von den Einlasskanälen 14, 15 als auch von den Auslasskanälen 16, 17 nach außen. In den Bereichen 36 dazwischen ist die Strömungsgeschwindigkeit demzufolge reduziert.

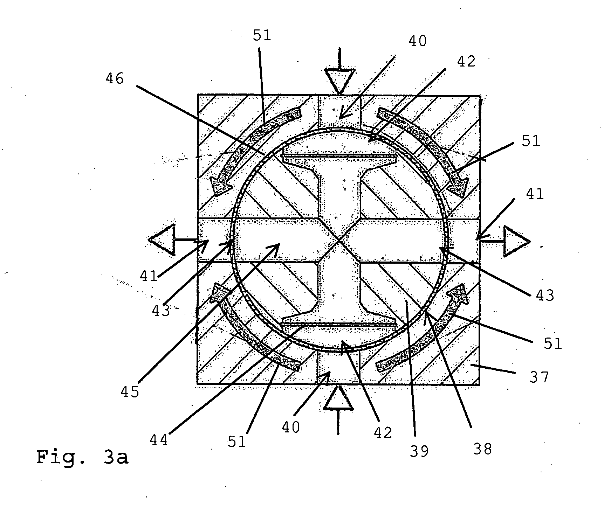

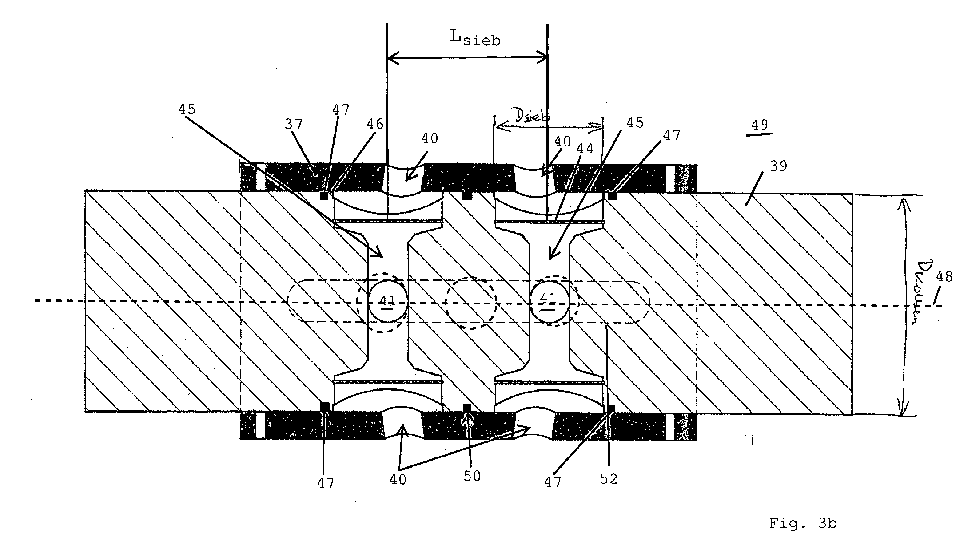

Fig. 3a und 3b zeigen einen Quer- bzw. Längsschnitt durch eine erfindungsgemäße Filtervorrichtung mit einem Gehäuse 37 und einem in einer Ausnehmung 38 des Gehäuses 37 angeordneten Schieber 39. Das Gehäuse 37 weist gegenüberliegende Einlasskanäle 40 und ebenfalls gegenüberliegende Auslasskanäle 41 auf. Ihnen gegenüber sind in einer Durchlassposition des Schiebers 39 jeweils Einlassmündungen 42 und Auslassmündungen 43 des Schiebers 39 angeordnet, wobei die Einlassmündungen 42 Aufnahmen für Filterelemente 44 bilden. Die Einlassmündungen 42 und die Auslassmündungen 43 sind Teil eines Durchlasskanals 45 im Schieber und über den Durchlasskanal 45 miteinander verbunden. Das zu reinigende Fluid strömt unter Druck durch die Einlasskanäle 40 auf die Einlassmündungen 42 und die darin angeordneten Filterelemente 44. Es wird mit einer bestimmten Anströmgeschwindigkeit durch die Filterelemente 44 befördert und strömt dann entlang des Durchlasskanals 45 zu den beiden Auslassmündungen 43 und von dort durch die Auslasskanäle 41 weiter.

Zwischen dem Schieber 39 und der Wand der Aufnahme 38 des Gehäuses 37 ist ein Spalt 46 ausgebildet. Im Unterschied zu den vorangehenden Ausführungsbeispielen ist der Spalt 46 durch Dichtungselemente 47 (vgl. Fig. 3b) begrenzt. Die Dichtungselemente 47 umgeben den Schieber 39 und bilden einen dichten Abschluss zwischen Schieber 39 und Gehäuse 37. Dabei sind die Dichtungselemente 47 jeweils in einer Ebene parallel zu den Durchlasskanälen 45 bzw. senkrecht auf eine Längsachse 48 des Schiebers angeordnet. Grundsätzlich können aber beliebige Anordnungen gewählt werden, welche zugleich eine Abdichtung des Spalts 46 zwischen den Einlasskanälen 40 und der Umgebung 49 sowie zwischen den Auslasskanälen 41 und der Umgebung 49, nicht jedoch zwischen den Einlasskanälen 40 und den Auslasskanälen 41 erzielen. Je nach gewünschtem Strömungsverlauf kann bei mehreren Durchlasskanälen 45 auch zwischen den Durchlasskanälen 45 ein Dichtungselement 50 angeordnet sein, welches die Spülströme der beiden Durchlasskanäle 45 trennt. Dies ist insbesondere dann von Vorteil, wenn die Spülströme beispielsweise in einer Rückspülposition in entgegengesetzte Richtungen strömen oder wenn unterschiedliche Strömungsgeschwindigkeiten in den jeweils einem Durchlasskanal 45 zugeordneten Spaltabschnitten zu erwarten sind.

Die Breite des Spalts 46 ist so gewählt, dass ein Teil des Fluids anstatt entlang des Durchlasskanals 45 durch den Schieber 39 hindurch zu strömen, außen am Schieber 39 vorbei von den Einlasskanälen 40 direkt zu den Auslasskanälen 41 strömt, wobei die Strömungsgeschwindigkeit dieser Spülströme etwa der Anströmgewindigkeit der Filterelemente 44 entspricht. Eine Strömung zur Umgebung 49 mit dem damit verbundenen Verlust an Fluid wird durch die Dichtungselemente 47 verhindert. Dadurch entstehen im Bereich des Durchlasskanals 45 vier Spülströme, deren Verlauf und Richtung durch die Pfeile 51 in Fig. 3a angegeben ist. Die Spülströme bilden somit einen Polymerpuffer auf dem der Schieber 39 zentriert gelagert ist. Die Auslassmündungen 43 der Durchlasskanäle 45 können über einen Mündungskanal 52 in der Ausnehmung 38 des Gehäuses 37 miteinander verbunden sein bzw. untereinander kommunizieren. Der Durchmesser eines Filterelements 44 ist mit $D_{sieb}$ bezeichnet und der Abstand zwischen den Durchlasskanälen 45 bzw. den Mittelpunkten der Filterelemente 44 ist mit $L_{sieb}$ bezeichnet; $D_{Kolben}$ bezeichnet den Durchmesser des Schiebers 39 (vgl. Tabelle am Ende der Beschreibung für Beispiele).

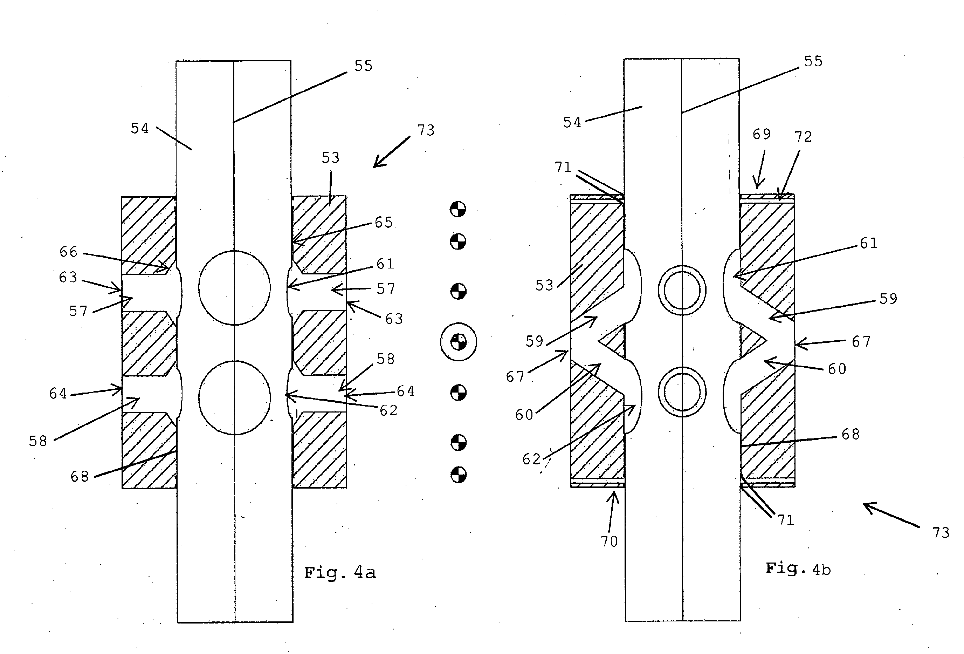

Fig. 4a und 4b zeigen eine weitere Variante der erfindungsgemäßen Vorrichtung anhand jeweils eines Schnitts durch ein Gehäuse 53 und den darin aufgenommenen Schieber 54 in einer Durchlassposition entlang der Längs- und Verschiebungsachse 55 des Schiebers 56, wobei Fig. 4a in der Ebene der Auslasskanäle 57, 58 schneidet und Fig. 4b in der Ebene der Einlasskanäle 59, 60 schneidet. Wie in Fig. 4a ersichtlich, weist der Schieber 54 zwei Durchlasskanäle 61, 62 auf, welche entlang der Verschiebungsachse 55 versetzt im Schieber 54 angeordnet ist. Die insgesamt vier den beiden Durchlasskanälen zugeordneten Auslass-Teilkanäle 57, 58 (im Folgenden kurz Auslasskanäle) sind im Wesentlichen parallel angeordnet. Das Gehäuse 53 weist demzufolge vier Auslässe 63, 64 auf. Die Auslasskanäle 57, 58 weisen zu einer im Gehäuse 53 vorgesehenen Schieberaufnahme 65 hin in Verschieberichtung, d.h. in Richtung der Verschiebungsachse 55, eine Erweiterung 66 auf. Die Mündungen der Auslasskanäle 57, 58 an der Innenseite des Gehäuses 53 sind demzufolge im Wesentlichen oval bzw. elliptisch, wobei die Hauptachse parallel zur Verschiebungsachse 55 ist. Alternativ können die Mündungen auch kreisförmig sein, wobei die Erweiterungen der Auslasskanäle 57, 58 kegelstumpfförmig ist. In der in Fig. 4a und 4b dargestellten Durchlassposition des Schiebers 54 sind die Auslasskanäle 57, 58 gegenüber den Durchlasskanälen 61, 62 zentriert angeordnet. Der Abstand zwischen den auslassseitigen Mündungsmittelpunkten des Schiebers 54 und des Gehäuses 53 ist gleich. Die auslassseitigen Mündungen der Durchlasskanäle 61, 62 sind kleiner als die erweiterten Mündungen der Auslasskanäle 57, 58. Am Schieber 54 sind außerdem die höheren einlassseitigen Mündungen der Durchlasskanäle 61, 62 angedeutet. Aufgrund der erweiterten Mündungen der Auslasskanäle 57, 58 ist der Abstand zwischen diesen Mündungen geringer als jener zwischen den Auslassmündungen des Schiebers 54.

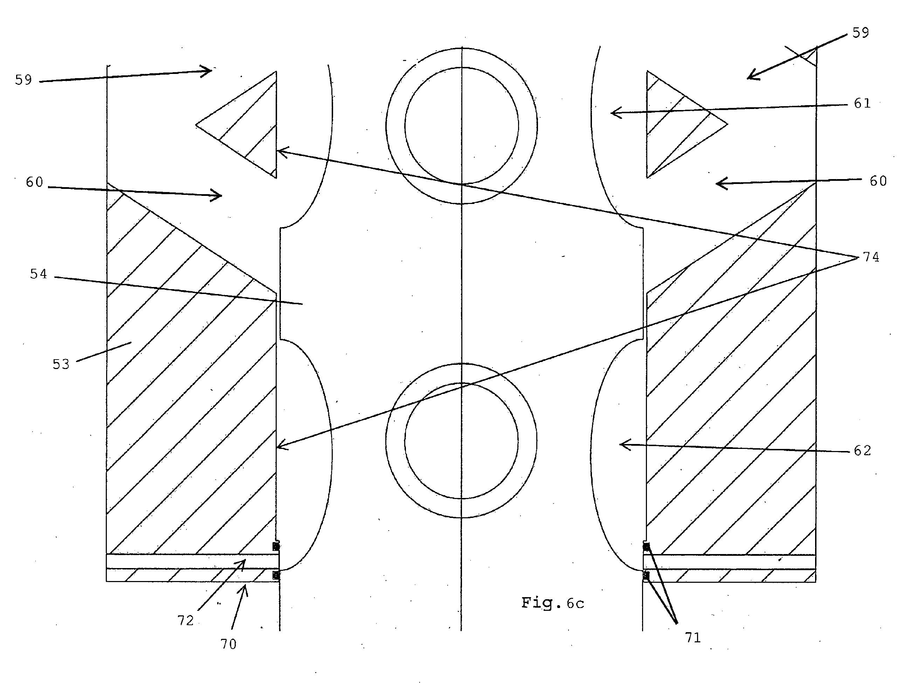

In Fig. 4b ist ein Schnitt wie in Fig. 4a gezeigt, jedoch in einer um 90° um die Verschiebungsachse 55 gedrehten Schnittebene, welche das Gehäuse 53 in der Ebene der Einlasskanäle 59, 60 schneidet. Die beiden Durchlasskanäle 61, 62 sind offenbar jeweils mit denselben beiden Einlässen 67 verbunden. Damit die Einlasskanäle 59, 60 ausgehend von zwei Einlässen 67 in vier Einlassmündungen am Schieber 54 münden, müssen die Kanäle geteilt und die Einlass-Teilkanäle 59, 60 (im Folgenden kurz Einlasskanäle) jeweils in unterschiedliche Richtungen gegenüber der die Einlässe 67 verbindenden Achse geneigt sein. Anders als die Auslasskanäle 57, 58 weisen die Einlasskanäle 59, 60 im Gehäuse 53 keine Erweiterungen auf. Die Einlass-Mündungen der Durchlasskanäle 61, 62 im Schieber 54 sind etwa doppelt so hoch wie die Einlasskanäle 59, 60. Der Abstand zwischen den Mündungen der Einlasskanäle 59, 60 ist im Wesentlichen gleich dem Abstand zwischen den Einlass-Mündungen der Durchlasskanäle 61, 62. Demzufolge sind die Mittelpunkte der Mündungen der Einlasskanäle 59, 60 enger beisammen angeordnet als die Mittelpunkte der Einlass-Mündungen der Durchlasskanäle 61, 62. Da die Durchlasskanäle 61, 62 im Schieber 54 in einer Ebene quer zur Verschiebungsachse 55 liegen, ist an der Gehäuseinnenseite, d.h. in der Schieberaufnehmung 65, der Abstand zwischen den Mündungsmittelpunkten der Einlasskanäle 59 und 60 kleiner als bei den Auslasskanälen 57, 58. Der Abstand zwischen den genannten Mündungen ist jedoch etwa gleich. In der in Fig. 4a und 4b gezeigten Durchlassposition ist die Anordnung aus Gehäuse 53 und Schieber 54 im Wesentlichen flächensymmetrisch bezüglich einer mittig zwischen den beiden Durchlasskanälen 61, 62 und quer zur Verschiebungsachse 55 angeordneten Symmetrieebene, so dass bei der Aufteilung in alle Teilkanäle 59, 60 der Einlässe 67 im Wesentlichen dieselbe Menge an Fluid eintritt und ebenso aus allen Auslasskanälen 57, 58 dieselbe Menge an gefiltertem Fluid austritt. Zwischen Gehäuse 53 und Schieber 54 ist ein Spalt 68 vorgesehen, der an der Oberseite 69 und Unterseite 70 des Gehäuses 53 an den Rändern der Ausnehmung 65 durch Dichtungsringe 71 begrenzt ist. Außerdem sind in Fig. 2b zwischen den Dichtungsringen 71 Rückspülkanäle 72 vorgesehen, die unten in Zusammenhang mit Fig. 6c genauer erklärt werden.

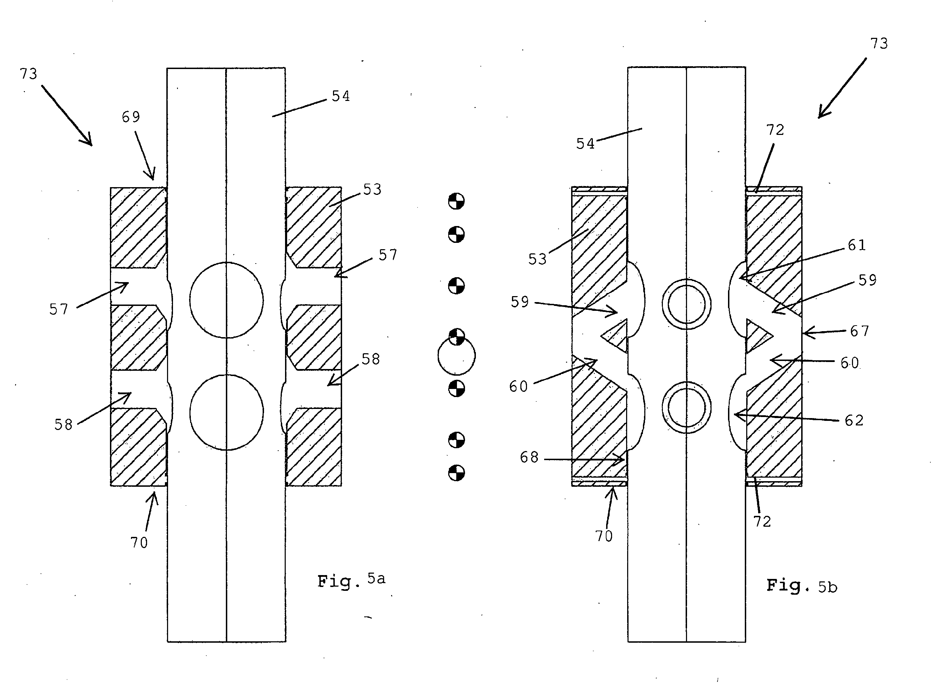

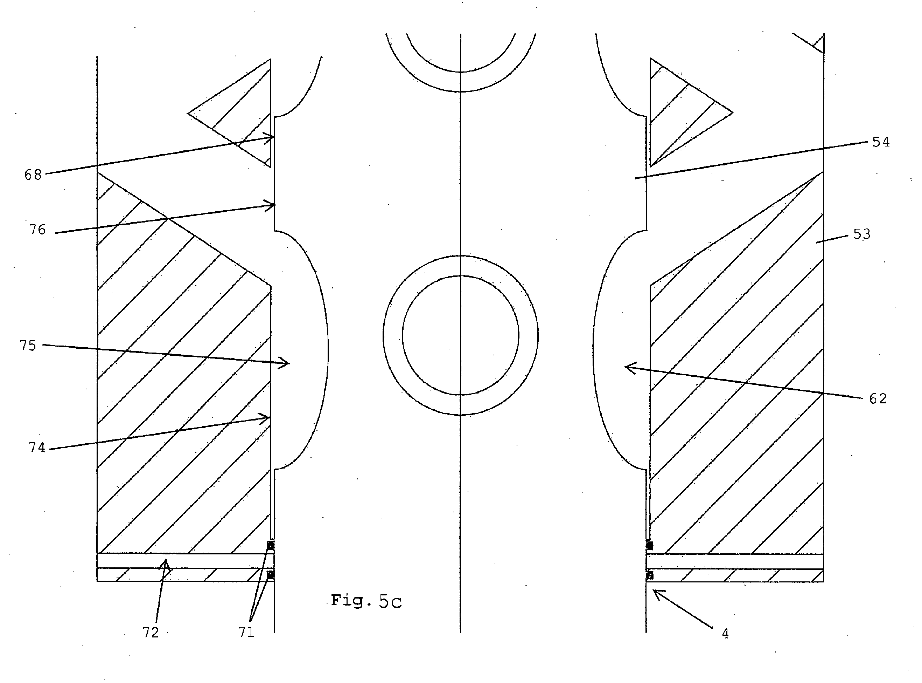

Fig. 5a und 5b zeigen die Vorrichtung 73 gemäß Fig. 4a und 4b in denselben Perspektiven, jedoch mit veränderter Schieberposition. Der Schieber 54 ist hierbei geringfügig, d.h. weniger als die Breite eines Einlasskanals 59, 60, in Richtung zur Unterseite 70 des Gehäuses 53 verschoben. Da die auslassseitigen Mündungen zwischen Gehäuse 53 und Schieber 54 in Durchlassposition zentriert sind, weisen in der verschobenen Position alle auslassseitigen Mündungen denselben offen verbleibenden Querschnitt auf. Im Gegensatz dazu sind die Einlassmündungen des unteren Durchlasskanals 62 in Fig. 5b so gegenüber den Einlasskanälen 59, 60 verschoben, dass die Mündungen der unteren Einlasskanäle 60 etwa zur Hälfte verschlossen sind. Demgegenüber sind die oberen Einlasskanäle 59 aufgrund der höheren Einlass-Mündungen des oberen Durchlasskanals 61 vollständig geöffnet. Der Schieber 54 kann nun vorteilhaft zwischen der hier gezeigten, nach unten verschobenen und einer entsprechend in die entgegengesetzte Verschieberichtung aus der Durchlassposition (vgl. Fig. 4a und 4b) nach oben verschobenen Position oszillieren bzw. pendeln oder schwingen. Dabei werden Druckunterschiede im Spalt 68 zwischen Gehäuse 53 und Schieber 54 hervorgerufen, die Ablagerungen und Verfestigungen des Fluids im Spalt 68 verhindern oder diesen zumindest entgegenwirken. Durch die Veränderungen der Öffnungen der unteren Einlasskanäle 60 werden zusätzlich Strömungsunterschiede zwischen den beiden Durchlasskanälen 61, 62 erzeugt, die eine verbesserte Spülung im jeweils schneller durchströmten Durchlasskanal 61 bzw. 62 ermöglichen. Außerdem werden durch die Verschiebungen den Mündungen benachbarte Oberflächen am Schieber 54 und im Gehäuse 53 vorübergehend freigestellt und somit vom Hauptstrom des Fluids umspült. In Fig. 5c ist eine Detailansicht des unteren Durchlasskanals 62 gemäß Fig. 5b gezeigt. Dabei ist der Spalt 68 zwischen Schieber 54 und Gehäuse 53 erkennbar. Eine der Einlassmündung benachbarte Innenfläche 74 des Gehäuses 53 ist in der die Einlass-Mündung des Schiebers 54 bildenden Filteraufnahme 75 freigestellt, so dass etwaige Ablagerungen abgespült werden können. Außerdem ist eine Oberfläche 76 des Schiebers 54 zwischen den Durchlasskanälen 61, 62 dem Fluidstrom ausgesetzt und wird dadurch ebenfalls gespült. Die beiden Dichtungsringe 71 am unteren Rand der Schieberaufnahme 65 begrenzen den Spalt 68 und verhindern eine Leckage, d.h. ein Austreten des Fluids durch den Spalt 68 zur Unterseite 70 des Gehäuses 53. Zwischen den Dichtungsringen 71 ist ein Rückspülkanal 72 vorgesehen, der jedoch in der hier gezeigten Position, d.h. beim Oszillieren, vom Schieber 54 verschlossen ist.

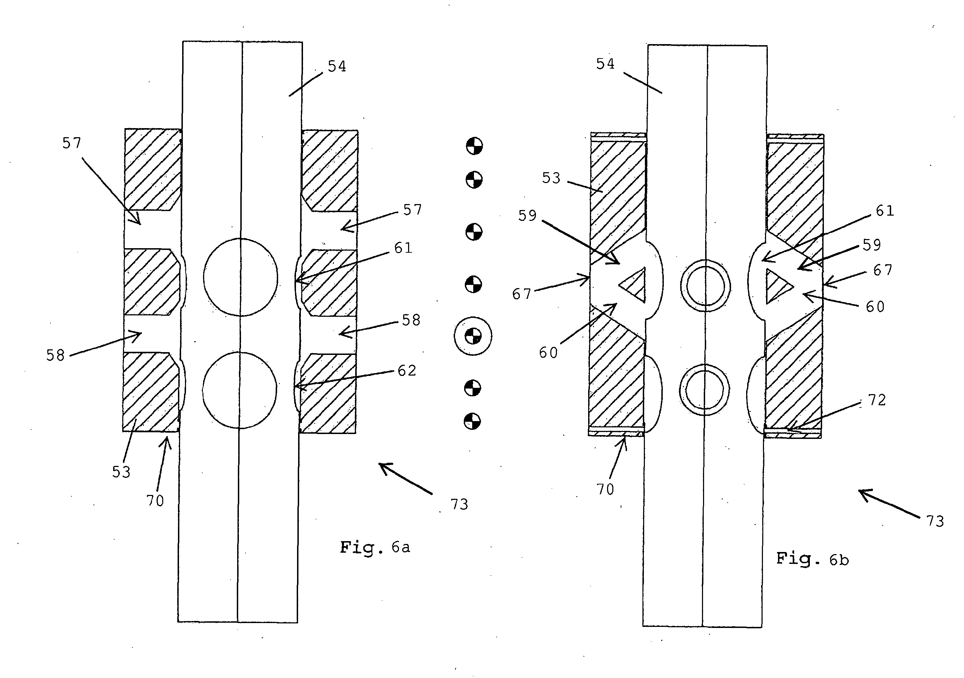

In Fig. 6a, 6b und der Detailansicht 6c ist das Gehäuse 53 mit dem Schieber 54 in einer Rückspülposition gezeigt. Dabei ist der Schieber 54 so weit in Richtung Unterseite 70 des Gehäuses 53 verschoben, dass der obere Durchlasskanal 61 zwischen den oberen Auslasskanälen 57 und den unteren Auslasskanälen 58 im Wesentlichen zentriert ist. Trotzdem kommunizieren weiterhin beide Durchlasskanäle 61, 62 mit zumindest einem Auslasskanal 57, 58 im Gehäuse 53. Allerdings ist der untere Durchlasskanal 62 gegenüber den Einlasskanälen 60 verschlossen und kommuniziert stattdessen mit dem Rückspülkanal 72. Der durch die Einlässe 67 am Gehäuse 53 eintretende Fluidstrom mündet somit zur Gänze in den oberen Durchlasskanal 61. Ausflussseitig tritt der Fluidstrom aus der Mündung des oberen Durchlasskanals 61 in alle vier Auslasskanälen 57, 58. Von den unteren Auslasskanälen 58 strömt ein Teil des Fluids sodann in den unteren Durchlasskanal 62, jedoch entgegen der betriebsmäßigen Durchlassrichtung, und tritt an dessen Einlass-Mündung aus dem Durchlasskanal 62 und in den Rückspülkanal 72. In dieser Position werden die Filter (hier nicht gezeigt) des unteren Durchlasskanals 62 und die Innenwände 74 des Gehäuses 53 benachbart des Rückspülkanals 72 und zwischen den Einlass- bzw. Auslasskanälen 57, 58, 59, 60 gespült und gereinigt. Selbstverständlich ist eine äquivalente, jedoch einen Filter des oberen Durchlasskanals 61 reinigende Rückspülposition auf der anderen Seite 69 des Gehäuses 53 ebenfalls vorgesehen, so dass sämtliche Filter ohne Unterbrechung des Fluidstroms gespült werden können.

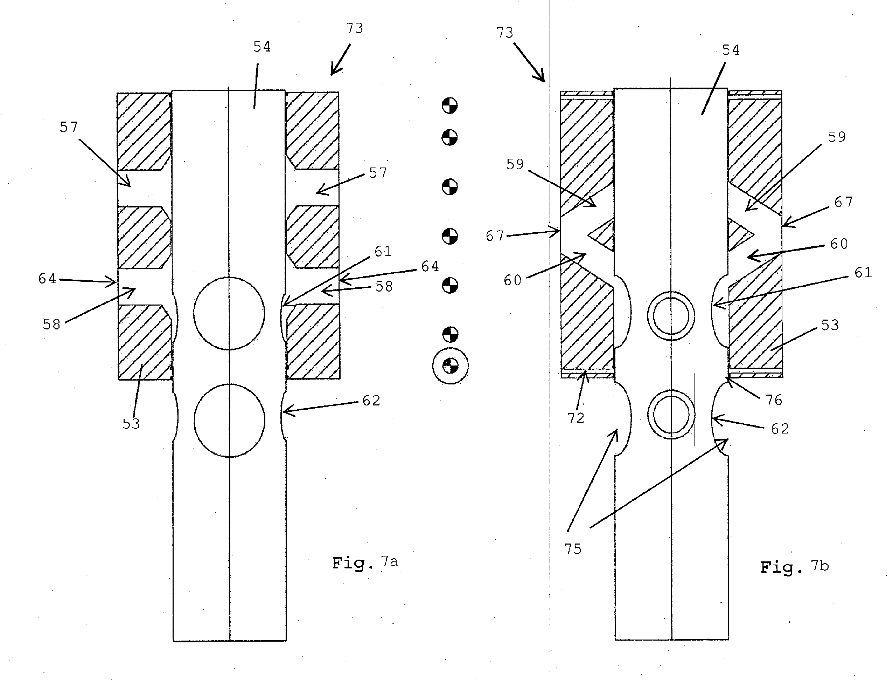

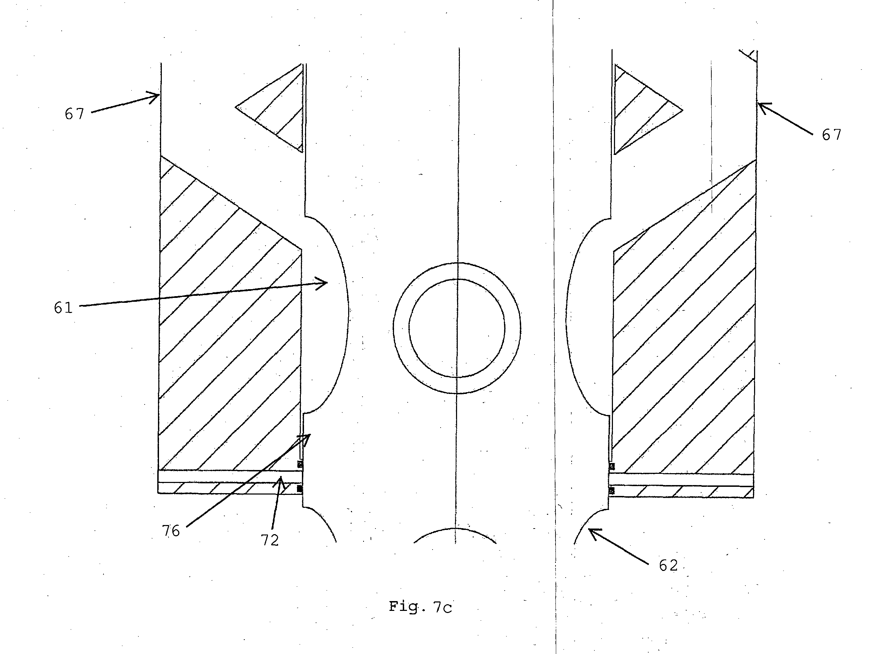

Fig. 7a und 7b zeigen die vorliegende Vorrichtung 73 in einer Filterwechselstellung. Dabei ist der Schieber 54 so weit im Gehäuse 53 verschoben, dass der Rückspülkanal 72 vom Mittelteil 76 des Schiebers 54 verschlossen ist. Die Filteraufnahmen 75 des unteren Durchlasskanals 62 sind dabei außerhalb des Gehäuses 53 angeordnet, so dass ein Filterwechsel oder eine Filterwartung durchgeführt werden kann. Der obere Durchlasskanal 61 kommuniziert mit den unteren Einlasskanälen 60 und den unteren Auslasskanälen 58, so dass ein Fluidstrom zwischen den Einlässen 67 und den unteren Auslässen 64 des Gehäuses 53 aufrecht bleibt. Lediglich in den oberen Einlasskanälen 59 und den oberen Austrittskanälen 57 kommt der Fluidstrom während eines Filterwechsels des unteren Durchlasskanals 62 beinahe zum Erliegen. Ein Filterwechsel des oberen Durchlasskanals 61 kann in einer gegenüber der Durchlassposition umgekehrt, d.h. nach oben statt nach unten, verschobenen Filterwechselstellung durchgeführt werden.

Nachdem die gegenständliche Erfindung unter anderem für die Filtration von Lösungen bestehend aus Cellulose, Aminoxid und Wasser eingesetzt werden soll ist bei der mechanischen Ausgestaltung des Filterapparates auch auf die produktspezifischen Eigenschaften, wie Viskosität, Scherverhalten, Kristallisationsneigung, Zersetzungsprodukte Rücksicht zu nehmen. Unter Berücksichtigung dieser Produkteigenschaften muss der erfindungsgemäße Apparat gemäß der o. a. mechanischen Maßnahmen (Strömungsgeschwindigkeit, Spaltbreite etc.) auch an die prozesserforderlichen Maßnahmen und Betriebsweisen angepasst werden.

Beispiel für eine entsprechende Verfahrensführung sind in nachstehender Tabelle dargestellt. Die Zusammenhänge zwischen den Parametern sind anschließend erläutert:

| | | | Beispiel 1 | Beispiel 2a | Beispiel 2b |
|---|---|---|---|---|---|
| Temperatur Polymermasse | $T_p$ | °C | 92,00 | 94,00 | 94,00 |
| Nullscherviskosität (85°C) | $n_0$ | Pas | 15.243,00 | 12.397,00 | 12.397,00 |
| Cellulosekonzentration | | | 12,50 | 12,50 | 12,50 |
| Dichte | | $kg/dm^3$ | 1,20 | 1,20 | 1,20 |
| Mittlerer Filtrations-Differenzdruck | | bar | 40,00 | 45,00 | 35,00 |
| | | | | | |
| Siebflächenbelastung | SB | $kg/m^{2}*min$ | 73,68 | 194,06 | 194,06 |
| Spülstromgeschwindigkeit | $v_s$ | cm/s | 0,10 | 0,26 | 0,40 |
| | | | | | |
| Gehäusehöhe | $H_g$ | mm | 270,00 | 1.180,00 | 1.180,00 |
| Siebdurchmesser | $D_{sieb}$ | mm | 120,00 | 300,00 | 300,00 |
| Anzahl Siebe je Kolben | | - | 2,00 | 4,00 | 4,00 |
| Siebfläche je Kolben | $A_{kolben}$ | $mm^2$ | 22.619,47 | 282.743,34 | 282.743,34 |
| Kolbendurchmesser | $D_{kolben}$ | mm | 170,00 | 430,00 | 430,00 |
| Siebmittenabstand | $L_{sieb}$ | mm | 0,00 | 380,00 | 380,00 |
| Polymerpufferfaktor | $PV_{spez.}$ | $mm^3/mm^2$ | 0,85 | 0,97 | 3,23 |
| Spaltbreite | s | mm | 0,30 | 0,30 | 1,00 |
| | | | | | |
| Anzahl Spülströme je Kolben | $n_s$ | | 4,00 | 4,00 | 4,00 |
| Spülquerschnitt je Kolben | $SQ_K$ | $mm^2$ | 144,00 | 816,00 | 2.720,00 |
| spez. Spülquerschnitt | $SQ_{spez.}$ | -- | 0,64% | 0,29% | 0,96% |

(fortgesetzt)

|  | | | Beispiel 1 | Beispiel 2a | Beispiel 2b |
|---|---|---|---|---|---|
| Oszillationsbereich | $L_{osz.}$ | mm | 10,00 | 44,00 | 44,00 |
| Rotation | $\alpha_r$ | ° | 0,00 | 0,00 | 0,00 |
| Einfach/ Mehrfach Lagerung | | - | einfach | mehrfach | mehrfach |
| Länge hydrodynamische Lagerung | $L_h$ | mm | 140,00 | 768,00 | 768,00 |
| hydrodynamische Lagerung - L/D | $L_h/D_{Kolben}$ | | 0,82 | 1,79 | 1,79 |
| Spinnsicherheit | | | 2 | 1 bis 2 | 3 |
| Niedrigste gemessene Onset Temperatur im Spülstrom | | °C | 171,00 | 175,00 | 171,00 |

Die in der Tabelle angegebenen Werte wurden für eine Vorrichtung gemäß Fig. 3a berechnet, wie an der Anzahl von vier Spülströmen je Kolben (so wird im Folgenden das Schiebemittel bzw. der Schieber genannt) ersichtlich ist. Beispiel 1 betrifft eine kompakte Filtervorrichtung mit einem einzelnen Durchlasskanal, weshalb der Siebmittenabstand $L_{sieb}$ als 0,0 eingetragen ist. Demgegenüber behandeln die Beispiele 2a und 2b eine vergleichsweise größere Filtervorrichtung mit zwei Durchlasskanälen. Die beiden letzteren Beispiele unterscheiden sich in der Spaltbreite und den davon abhängigen Parametern. Der breitere Spalt in Beispiel 2b bewirkt eine signifikante Verschlechterung der so genannten Spinnsicherheit. Die Spinnsicherheit wird subjektiv, abhängig von Spinnfehlern, wie Abreißern, Verklebungen, usw. bestimmt und ist bei sonst vergleichbaren Bedingungen ein zuverlässiges Maß für die Filtrationsqualität.

Bei der Wahl der Spaltbreite wird der zu diesem Zweck eingeführte Polymerpufferfaktor PV herangezogen. Dieser hängt gemäß der Gleichung

$$PV = \frac{s \cdot L_s \cdot H_s}{A_{Kolben}} = \frac{s \cdot (L_{sieb} + D_{sieb}) \cdot (D_{Kolben} \cdot \pi)}{A_{Kolben}}$$

mit der Spaltbreite s, der Spaltlänge $L_s$, der Spalthöhe $H_s$ und der Siebfläche je Kolben $A_{kolben}$ zusammen und entspricht dem Verhältnis des Spaltvolumens zur Siebfläche je Kolben. Die Länge des Spalts (in Längsrichtung des Kolbens) entspricht der Summe des Siebdurchmesser $D_{sieb}$ und des Mittenabstands $L_{sieb}$ etwaiger mehrerer Siebe; die "Höhe" des Spalts entspricht dem Kolbenumfang. Erfindungsgemäß werden die genannten Parameter so abgestimmt, dass PV einen Wert zwischen 0,5 mm und 3 mm annimmt.

Ein weiterer für die Spülströmung relevanter Parameter ist die hydrodynamische Lagerung L/D. Damit ist das Verhältnis von Länge zur Höhe des Fluidfilms im Spalt gemeint, wobei L/D sich genauer als $L_h/D_{Kolben}$ berechnet und $L_h=L_{sieb}+D_{sieb}+2L_o$, die Summe aus Siebdurchmesser und -abstand und dem zweifachen Oszillationsbereich $L_o$ ist. Es hat sich herausgestellt, dass das L/D Verhältnis vorzugsweise im Bereich zwischen 0,6 und 3 liegen sollte.

Ebenfalls als Indikator für eine geeignete Spülströmung kann der spezifische Spülquerschnitt $SQ_{spez}$ verwendet werden. Dieser ist mit dem Polymerpufferfaktor verwandt, setzt aber anstelle der Spalthöhe $H_s$ die Anzahl der Spülströme $n_s$ und ist somit ein dimensionsloser Parameter. Ein geeigneter Wertebereich für den spezifischen Spülquerschnitt ist zwischen 0,2% und 1,5%.

Wie in den gezeigten Beispielen angegeben, kann mit den entsprechend dimensionierten Vorrichtungen eine vergleichsweise hohe Onset-Temperatur erzielt werden, d.h. die niedrigste gemessene Temperatur, bei der eine Autokatalytische Reaktion einsetzt, ist höher als bei verleichbaren Filtervorrichtungen im Stand der Technik (üblicherweise zwischen 130°C und 160°C). Die positiven Auswirkungen der patentgemäßen Ausführung bzw. Verfahrensführung bestätigt sich auch bei der Beurteilung des Spinnverhaltens.. Die Spinnsicherheit wird in den Beispielen nach einer Skala von 1 bis 5 bewertet. Wobei ein Wert von 1 eine ausgezeichnete Spinnsicherheit ohne jegliche Störungen repräsentiert, bei einem Wert von 5 ist hingegen kein ordnungsgemäßes Spinnen mehr möglich, es kommt andauernd zu Fadenabrissen und großflächigen Verklebungen, sodass ein ständiges Neuanspinnen erforderlich ist. Die Spinnsicherheit lag bei den gezeigten Beispielen im Bereich von 1 bis 2, was eine sehr gute Verfahrens-Sicherheit und ausgezeichnete Produktqualität darstellt. Lediglich bei Beispiel 2b kam es durch den vergrößerten Spülspalt und dem damit einhergehenden erhöhten Anteil an unfiltrierter Spinnlösung im Spinnmassestrom zu häufigen Abreißern und vereinzelten Verklebungen, was sich in Summe in einer reduzierten Spinnsicherheitswert von 3 niederschlug. Dies wird durch die quasi nicht existenten Totzonen erreicht, die eine Reaktion begünstigen würden. Zugleich kann bei dem vorliegenden Verfahren ein Fluidverlust komplett unterbunden werden.

**Patentansprüche**

1. Verfahren zur Reinigung eines Fluids mit einer Filtervorrichtung (10), welche ein Gehäuse (11) mit mindestens einem Einlass (19, 20) und mindestens einem Auslass (21, 22) aufweist und ein im Gehäuse (11) verschiebbar aufgenommenes Schiebemittel (12) mit mindestens einem Durchlasskanal (25) mit mindestens zwei im Wesentlichen symmetrisch gegenüberliegenden Filtern (28), wobei das Fluid ausgehend vom Einlass (19, 20) des Gehäuses (11) die Filter (28) im Durchlasskanal (25) symmetrisch anströmt und hinter den Filtern (28) im Durchlasskanal (25) zum Auslass des Gehäuses (11) geleitet wird, wobei ein Teil des Fluids, welcher nicht durch den Durchlasskanal (25) strömt, in einem Spalt (29) zwischen Schiebemittel (12) und Gehäuse (11) einen hydrodynamischen Puffer bildet, **dadurch gekennzeichnet, dass** der Durchlasskanal (25) in zumindest zwei symmetrisch gegenüberliegende Teilkanäle (16, 17) des Auslasses (21, 22) des Gehäuses (11) mündet, wobei im Spalt (29) zwischen mindestens zwei Einlassmündungen (30) und mindestens zwei Auslassmündungen (31) des Durchlasskanals (25) mindestens vier Spülströme erzeugt werden.

2. Verfahren nach Anspruch 1, **dadurch gekennzeichnet, dass** die Strömungsgeschwindigkeit der Spülströme im Wesentlichen gleich der Anströmgeschwindigkeit der Filter (28) ist und/oder im Bereich von 0,02 cm/s bis 0,60 cm/s ist.

3. Verfahren nach Anspruch 1 oder 2, **dadurch gekennzeichnet, dass** sämtliche Spülströme zu einem Auslass (41) des Gehäuses (37) geleitet werden, indem der Spalt (46) in Verschiebungsrichtung des Schiebemittels (39) durch Dichtungselemente (47) begrenzt ist.

4. Verfahren nach einem der Ansprüche 1 bis 3, **dadurch gekennzeichnet, dass** das Schiebemittel (39) zur Variation der Spülstromverteilung im Wesentlichen senkrecht zur Flußrichtung der Spülströme verschoben wird.

5. Verfahren nach einem der Ansprüche 1 bis 4, **dadurch gekennzeichnet, dass** das Schiebemittel (39) zur Variation der Spülstromverteilung gegenüber dem Gehäuse (37) verdreht wird, vorzugsweise um 1°-30°, besonders bevorzugt um 5°-15°.

6. Verfahren nach Anspruch 4 oder 5, **dadurch gekennzeichnet, dass** die Verschiebung bzw. Verdrehung des Schiebemittels (39) geringer ist als die Höhe bzw. Breite der Mündungen der Durchlass-, Einlass- und Auslasskanäle, so dass der Fluidstrom durch die Verschiebung bzw. Verdrehung nicht unterbrochen wird.

7. Verfahren nach einem der Ansprüche 4 bis 6, **dadurch gekennzeichnet, dass** die Verschiebung bzw. Verdrehung periodisch in beide Richtungen ausgehend von einer Durchlassposition durchgeführt wird, so dass das Schiebemittel (54) im Gehäuse (53) schwingt bzw. oszilliert.

8. Verfahren nach einem der Ansprüche 1 bis 7, **dadurch gekennzeichnet, dass** das Schiebemittel (54) mindestens zwei in Schieberichtung zueinander versetzte Durchlasskanäle (61, 62) aufweist, wobei das Schiebemittel (54) gerade so weit verschoben wird, dass einer der Durchlasskanäle (61, 62) gegenüber dem Einlass (67) vollständig verschoben und somit verschlossen ist aber weiterhin mit dem Auslass (63, 64) kommuniziert.

9. Verfahren nach Anspruch 8, **dadurch gekennzeichnet, dass** der gegenüber dem Einlass (67) vollständig verschobene und somit verschlossene Durchlasskanal (61, 62) eingangsseitig mit einem Rückspülkanal (72) im Gehäuse (53) kommuniziert, wobei die in diesem Durchlasskanal (61, 62) angeordneten Filter durch einen umgekehrten Fluss des Fluids vom Auslass (63, 64) zum Rückspülkanal (72) rückgespült werden.

10. Verfahren nach einem der Ansprüche 1 bis 9, **dadurch gekennzeichnet, dass** das Schiebemittel (54) in eine Filterwechselstellung verschoben wird, wobei eine Filteraufnahme (75) eines Durchlasskanals (62) vollständig außerhalb des Gehäuses (53) angeordnet ist, so dass ein in der Filteraufnahme (75) aufgenommener Filter entnommen bzw. ausgewechselt werden kann.

**11.** Filtervorrichtung (10, 73), insbesondere zur Durchführung des Verfahrens nach einem der Ansprüche 1 bis 10, mit einem Gehäuse (11, 37, 53), das mindestens einen Einlass (19, 20, 40, 67) und mindestens einen Auslass (21, 22, 41, 63, 64) aufweist, und mit einem im Gehäuse (11, 37, 53) verschiebbar aufgenommenen Schiebemittel (12, 39, 54), welcher mindestens einen Durchlasskanal (25, 45, 61, 62) mit zumindest zwei symmetrisch gegenüberliegenden Filtern aufweist, wobei zwischen dem Gehäuse (11, 37, 53) und dem Schiebemittel (12, 39, 54) ein Spalt (29, 46, 68) zum Durchtritt eines Teils des Fluids vorgesehen ist, **dadurch gekennzeichnet, dass** der Durchlasskanal (25, 45, 61, 62) in zumindest zwei symmetrisch gegenüberliegende Teilkanäle (16, 17, 41, 57, 58) des Auslasses (21, 22, 41, 63, 64) mündet.

**12.** Vorrichtung (73) nach Anspruch 11, **dadurch gekennzeichnet, dass** zwischen Schiebemittel (12, 39, 54) und Gehäuse (11, 37, 53), bevorzugt metallische, Dichtungselemente (47, 71) vorgesehen sind, welche den ansonsten durchgängigen Spalt (29, 46, 68) in Schieberichtung nach außen begrenzen.

**13.** Vorrichtung (73) nach Anspruch 11 oder 12, **dadurch gekennzeichnet, dass** die Spaltbreite so gewählt ist, dass der Quotient des Volumens (in $mm^3$) des Spalts (68) und der Summe der Filterflächen (in $mm^2$) des Schiebemittels (54) einen Wert zwischen 0,5 mm und 3 mm aufweist.

**14.** Vorrichtung (73) nach einem der Ansprüche 11 bis 13, **dadurch gekennzeichnet, dass** das Schiebemittel (54) mindestens zwei im Wesentlichen senkrecht auf eine Verschiebungsachse (55) des Schiebemittels (54) angeordnete Durchlasskanäle (61, 62) aufweist.

**15.** Vorrichtung (73) nach Anspruch 14, **dadurch gekennzeichnet, dass** im Gehäuse (53) ein Rückspülkanal (72) vorgesehen ist, welcher beim in eine Rückspülposition verschobenen Schiebemittel (54) mit einem der beiden Durchlasskanäle (61, 62) kommuniziert.

## Claims

**1.** A method for the purification of a fluid with a filtering device (10), which comprises a housing (11) with at least one inlet (19, 20) and at least one outlet (21, 22) and a sliding means (12) received displaceably in the housing (11) and having at least one through-flow channel (25) with at least two filters (28) arranged essentially symmetrically opposite one another, wherein the fluid proceeding from the inlet (19, 20) of the housing (11) flows symmetrically against the filters (28) in the through-flow channel (25) and is conveyed after the filters (28) in the through-flow channel (25) to the outlet of the housing (11), wherein a part of the fluid that does not flow through the through-flow channel (25) forms a hydrodynamic buffer in a gap (29) between the sliding means (12) and the housing (11), **characterised in that** the through-flow channel (25) flows into at least two symmetrically opposing sub-channels (16, 17) of the outlet (21, 22) of the housing (11), wherein at least four flushing flows are produced in the gap (29) between at least two inlet mouths (30) and at least two outlet mouths (31) of the through-flow channel (25).

**2.** The method according to claim 1, **characterised in that** the flow rate of the flushing flows is essentially equal to the flow rate against the filters (28) and/or is in the range from 0.02 to 0.60 cm/s.

**3.** The method according to claim 1 or 2, **characterised in that** all the flushing flows are conveyed to an outlet (41) of the housing (37) by the fact that the gap (46) is limited in the displacement direction of the sliding means (39) by sealing elements (47).

**4.** The method according to any one of claims 1 to 3, **characterised in that**, for variation of the flushing flow distribution, the sliding means (39) is displaced essentially normal to the flow direction of the flushing flows.

**5.** The method according to any one of claims 1 to 4, **characterised in that**, for variation of the flushing flow distribution, the sliding means (39) is rotated with respect to the housing (37), preferably through 1°-30°, particularly preferably through 5°-15°.

**6.** The method according to claim 4 or 5, **characterised in that** the displacement and/or rotation of the sliding means (39) is smaller than the height or width of the mouths of the through-flow, inlet and outlet channels, so that the fluid flow is not interrupted by the displacement or rotation.

7. The method according to any one of claims 4 to 6, **characterised in that** the displacement and/or rotation is carried out periodically in both directions proceeding from a through-flow position, so that the sliding means (54) swings or oscillates in the housing (53).

8. The method according to any one of claims 1 to 7, **characterised in that** the sliding means (54) comprises at least two through-flow channels (61, 62) offset with respect to one another in the sliding direction, wherein the sliding means (54) is displaced just far enough for one of the through-flow channels (61, 62) to be completely displaced with respect to the inlet (67) and therefore closed, but to continue to communicate with the outlet (63, 64).

9. The method according to claim 8, **characterised in that** the through-flow channel (61, 62) completely displaced with respect to the inlet (67) and therefore closed communicates at the inlet side with a back-flushing channel (22) in the housing (53), wherein the filters disposed in this through-flow channel (61, 62) are back-flushed by an inverted flow of the fluid from the outlet (63, 64) to the back-flushing channel (72).

10. The method according to any one of claims 1 to 9, **characterised in that** the sliding means (54) is displaced into a filter replacement position, wherein a filter mount (75) of a through-flow channel (62) is disposed completely outside the housing (53), so that a filter mounted in the filter mount (75) can be removed and replaced.

11. A filtering device (10, 73), in particular for performing the method according to any one of claims 1 to 10, with a housing (11, 37, 53), which comprises at least one inlet (19, 20, 40, 67) and at least one outlet (21, 22, 41, 63, 64), and with a sliding means (12, 39, 54) which is received displaceably in the housing (11, 37, 53) and which comprises at least one through-flow channel (25, 45, 61, 62) with at least two filters arranged symmetrically opposite one another, wherein a gap (29, 46, 68) for the passage of a part of the fluid is provided between the housing (11, 37, 53) and the sliding means (12, 39, 54), **characterised in that** the through-flow channel (25, 45, 61, 62) flows into at least two symmetrically opposing sub-channels (16, 17, 41, 57, 58) of the outlet (21, 22, 41, 63, 64).

12. The device (73) according to claim 11, **characterised in that**, preferably metallic, sealing elements (47, 71) are provided between the sliding means (12, 39, 54) and the housing (11, 37, 53), said sealing elements limiting the otherwise continuous gap (29, 46, 68) in the sliding direction outwards.

13. The device (73) according to claim 11 or 12, **characterised in that** the gap width is selected such that the quotient of the volume (in $mm^3$) of the gap (68) and the sum of the filter areas (in $mm^2$) of the sliding means (54) has a value between 0.5 mm and 3 mm.

14. The device (73) according to any one of claims 11 to 13, **characterised in that** the sliding means (54) comprises at least two through-flow channels (61, 62) disposed essentially normal to a displacement axis (55) of the sliding means (54).

15. The device (73) according to claim 14, **characterised in that** a back-flushing channel (72) is provided in the housing (53), said back-flushing channel communicating with one of the two through-flow channels (61, 62) when the sliding means (54) is displaced into the back-flushing position.

**Revendications**

1. Procédé pour purifier un fluide à l'aide d'un dispositif de filtrage (10), qui comprend un boîtier (11) muni d'au moins une entrée (19, 20) et d'au moins une sortie (21, 22) et de moyens coulissants (12) logés de façon déplaçable dans le boîtier (11) et comportant au moins un canal d'écoulement traversant (25) muni d'au moins deux filtres (28) agencés de façon sensiblement symétrique opposés entre eux, dans lequel le fluide provenant de l'entrée (19, 20) du boîtier (11) s'écoule de façon symétrique vers les filtres (28) dans le canal d'écoulement traversant (25) et est transmis après les filtres (28) dans le canal d'écoulement traversant (25) vers la sortie du boîtier (11), dans lequel une partie du fluide qui ne s'écoule pas par le canal d'écoulement traversant (25) forme un tampon hydrodynamique dans un intervalle (29) entre les moyens coulissants (12) et le boîtier (11), **caractérisé en ce que** le canal d'écoulement traversant (25) s'écoule dans au moins deux sous-canaux symétriquement opposés (16, 17) de la sortie (21, 22) du boîtier (11), dans lequel au moins quatre flux d'évacuation sont produits dans l'intervalle (29) entre au moins deux bouches d'entrée (30) et au moins deux bouches de sortie (31) du canal d'écoulement traversant (25).

2. Procédé selon la revendication 1, **caractérisé en ce que** le débit des flux d'évacuation est sensiblement égal au débit vers les filtres (28) et/ou est compris entre 0,02 et 0,60 cm/seconde.

3. Procédé selon la revendication 1 ou 2, **caractérisé en ce que** tous les flux d'évacuation sont transmis vers une sortie (41) du boîtier (37) par le fait que l'intervalle (46) est limité dans la direction de déplacement des moyens coulissants (39) par des éléments d'étanchéité (47).

4. Procédé selon l'une quelconque des revendications 1 à 3, **caractérisé en ce que**, pour faire varier la répartition des flux d'évacuation, les moyens coulissants (39) sont déplacés sensiblement normalement à la direction des flux d'évacuation.

5. Procédé selon l'une quelconque des revendications 1 à 4, **caractérisé en ce que**, pour faire varier la répartition des flux d'évacuation, on fait tourner les moyens coulissants (39) par rapport au boîtier (37), de préférence entre 1° et 30°, en particulier de préférence entre 5° et 15°.

6. Procédé selon la revendication 4 ou 5, **caractérisé en ce que** le déplacement et/ou la rotation des moyens coulissants (39) sont plus petites que la hauteur ou la largeur des bouches des canaux de flux traversant, d'entrée et de sortie, de sorte que l'écoulement du fluide n'est pas interrompu par le déplacement ou la rotation.

7. Procédé selon l'une quelconque des revendications 4 à 6, **caractérisé en ce que** le déplacement et/ou la rotation sont réalisés périodiquement dans les deux directions en partant de la position de flux traversant, de sorte que les moyens coulissants (54) se balancent ou oscillent dans le boîtier (53).

8. Procédé selon l'une quelconque des revendications 1 à 7, **caractérisé en ce que** les moyens coulissants (54) comprennent au moins deux canaux d'écoulement traversant (61, 62) décalés l'un par rapport à l'autre dans la direction de coulissage, dans lequel les moyens coulissants (54) sont déplacés juste assez loin pour que l'un des canaux d'écoulement traversant (61, 62) soit complètement déplacé par rapport à l'entrée (67) et par conséquent fermé, mais continue à communiquer avec la sortie (63, 64).

9. Procédé selon la revendication 8, **caractérisé en ce que** le canal d'écoulement traversant (61, 62) complètement déplacé par rapport à l'entrée (67), et par conséquent fermé, communique du côté de l'entrée avec un canal d'évacuation arrière (22) dans le boîtier (53), dans lequel les filtres disposés dans ce canal d'écoulement traversant (61, 62) sont vidangés vers l'arrière par un flux inversé du fluide allant de la sortie (63, 64) vers le canal d'évacuation vers l'arrière (72).

10. Procédé selon l'une quelconque des revendications 1 à 9, **caractérisé en ce que** les moyens coulissants (54) sont déplacés dans une position de remplacement de filtre, dans laquelle une monture de filtre (75) d'un canal d'écoulement traversant (62) est disposée complètement à l'extérieur du boîtier (53), afin qu'un filtre monté dans la monture de filtre (75) puisse être retiré et remplacé.

11. Dispositif de filtrage (10, 73), en particulier pour réaliser le procédé selon l'une quelconque des revendications 1 à 10, muni d'un boîtier (11, 37, 53), qui comprend au moins une entrée (19, 20, 40, 67) et au moins une sortie (21, 22, 41, 63, 64), et muni de moyens coulissants (12, 39, 54) qui sont logés de façon déplaçable dans le boîtier (11, 37, 53) et qui comprennent au moins un canal d'écoulement traversant (25, 45, 61, 62) muni d'au moins deux filtres disposés de façon symétrique opposés entre eux, dans lequel un intervalle (29, 46, 68) pour le passage d'une partie du fluide est prévu entre le boîtier (11, 37, 53) et les moyens coulissants (12, 39, 54), **caractérisé en ce que** le canal d'écoulement traversant (25, 45, 61, 62) s'écoule dans au moins deux sous-canaux symétriquement opposés (16, 17, 41, 57, 58) de la sortie (21, 22, 41, 63, 64).

12. Dispositif (73) selon la revendication 11, **caractérisé en ce que** des éléments d'étanchéité (47, 71), de préférence métalliques, sont prévus entre les moyens coulissants (12, 39, 54) et le boîtier (11, 37, 53), les éléments d'étanchéité limitant l'intervalle autrement continu (29, 46, 68) dans la direction de coulissage orientée vers l'extérieur.

13. Dispositif (73) selon la revendication 11 ou 12, **caractérisé en ce que** la largeur de l'intervalle est sélectionnée de telle sorte que le rapport entre le volume (en $mm^3$ cube) de l'intervalle (68) et la somme des surfaces de filtrage (en $mm^2$) des moyens coulissants (54) a une valeur comprise entre 0,5 mm et 3 mm.

14. Dispositif (73) selon l'une quelconque des revendications 11 à 13, **caractérisé en ce que** les moyens coulissants (54) comprennent au moins deux canaux d'écoulement traversant (61, 62) disposés de façon sensiblement normale à un axe de déplacement (55) des moyens coulissants (54).

15. Dispositif (73) selon la revendication 14, **caractérisé en ce qu'**un canal d'évacuation vers l'arrière (72) est prévu dans le boîtier (53), le canal d'évacuation vers l'arrière communiquant avec l'un des deux canaux d'écoulement traversant (61, 62) lorsque les moyens coulissants (54) sont déplacés dans la position d'évacuation vers l'arrière.

Fig. 1

Fig. 2a

Fig. 2b

Fig. 2c

EP 2 740 522 B1

Fig. 3a

Fig. 3b

Fig. 4b

Fig. 4a

23

Fig. 5a

Fig. 5b

Fig. 5c

Fig. 6b

Fig. 6a

Fig. 6c

Fig. 7b

Fig. 7a

Fig. 7c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0314024 A2
- DE 19500060 C
- WO 9216351 A
- DE 9418880 U1
- DE 19519907 A1

- EP 0922558 A1
- EP 0781356 B1
- EP 0915729 B1
- EP 789822 A